# EUROPÄISCHE PATENTSCHRIFT

(11) **EP 1 693 618 B1**
(45) Veröffentlichungstag und Bekanntmachung des Hinweises auf die Patenterteilung: **27.07.2011**
(21) Anmeldenummer: 06000881.0
(22) Anmeldetag: 17.01.2006
(51) Int. Cl.: F23D 14/16

(54) **Porenkörpereinrichtung für einen Porenbrenner, Verfahren zur Herstellung einer Porenkörpereinrichtung für einen Porenbrenner und Porenbrenner**
Porous Body for a Porous Burner, Method for Manufacturing a Porous Body for a Porous Burner and Porous Burner
Corps poreux pour un brûleur poreux, procédé de fabrication d'un corps poreux pour un brûleur poreux et brûleur poreux

(30) Priorität: 21.01.2005 DE 102005004062
(43) Veröffentlichungstag der Anmeldung: 23.08.2006
(73) Patentinhaber: Deutsches Zentrum für Luft- und Raumfahrt e.V., 51147 Köln (DE)
(72) Erfinder: Schmidt, Jens, Dr., 70736 Fellbach (DE); Scheiffele, Matthias, 70567 Stuttgart (DE)
(74) Vertreter: Hoeger, Stellrecht & Partner Patentanwälte

(56) Entgegenhaltungen:
- EP-A- 1 255 077
- DE-A1- 3 341 868
- DE-A1-102004 006 824
- DE-C1- 10 228 411
- US-A- 3 155 142
- US-A- 4 280 329
- US-A- 4 889 481
- US-A- 4 977 111
- US-A- 5 249 953
- US-A- 5 989 013

## Beschreibung

Die Erfindung betrifft eine Porenkörpereinrichtung für einen Porenbrenner, umfassend einen ersten Bereich, welcher als Vorwärmzone ausgebildet ist und über den einem zweiten Bereich Gas zuführbar ist, (wobei der zweite Bereich als Verbrennungszone ausgebildet ist, wobei der erste Bereich aus einem carbidkeramischen Material hergestellt ist, der zweite Bereich aus einem carbidkeramischen Material hergestellt ist, und der erste Bereich und der zweite Bereich das gleiche carbidkeramische Material enthält, wobei sich der erste Bereich und der zweite Bereich bezüglich Porenverteilung und/oder Porosität und/oder Porenausrichtung und/oder Porengröße unterscheiden und wobei der erste Bereich und der zweite Bereich Wellenlagen aufweisen, wobei eine Wellenlage eine in mindestens einer Richtung variierende lokale Höhe aufweist.

Die Erfindung betrifft ferner ein Verfahren zur Herstellung einer Porenkörpereinrichtung für einen Porenbrenner.

Weiterhin betrifft die Erfindung einen Porenbrenner.

Porenbrenner sind in dem Artikel "Porenbrenner in der Energie- und Wärmetechnik" von F. Durst et al. in Bulletin SEV/VSE 21/98, Seiten 11 bis 18 beschrieben. Eine gattungsgemäße Porenkorpereinrichtung ist aus DE 10 2004 006 824 A bekannt.

Über die Vorwärmzone (die auch als A-Zone bezeichnet wird) strömt ein Gasgemisch in die Verbrennungszone (die auch als C-Zone bezeichnet wird). In der Vorwärmzone wird das Gasgemisch vorgewärmt. Die Vorwärmzone dient ferner als Rückschlagsperrre. In der Verbrennungszone verbrennt das Gasgemisch in Hohlräumen der Porenkörpereinrichtung. Wärme wird aus der Verbrennungszone über Strahlung, Festkörper-Wärmeleitung sowie durch konvektiven Wärmeübergang und Dispersion abgeführt.

Aus der CA 2,211,124 C ist ein Brenner bekannt, welcher eine Verbrennungskammer umfaßt, die in einem Gehäuse angeordnet ist. Das Gehäuse weist einen Einlaß für Luft und gasförmigen Brennstoff auf, eine Zündvorrichtung, und einen Auslaß für Abgas. Weiterhin ist ein poröser Körper vorgesehen, welcher mindestens teilweise die Verbrennungskammer ausfüllt. Der poröse Körper besteht aus einem temperaturbeständigen Material und hat Hohlräume, welche miteinander verbunden sind, um eine definierte Flammenzone auszubilden. Der poröse Körper ist ausgebildet als eine geordnete Packung, wobei die geordnete Packung aufgebaut ist aus Schichten an kreuzenden Materialbahnen und aus metallischen Materialien und/oder keramischen Materialien besteht.

Aus der US 5,249,953 ist eine Brennervorrlchtung für einen gasbefeuerten Infrarotbrenner bekannt, welche einen ersten Materialblock mit einer Vielzahl von kleinen Räumen zum Transport und zum Verteilen einer Mischung aus Verbrennungsgas und Luft und einen zweiten Materialblock mit einer Vielzahl von Räumen, die größer sind als die Räume des ersten Materialblocks, umfaßt. Durch den zweiten Block wird eine Verbrennungszone bereitgestellt.

Aus der US 4,977,111 ist ein Porenbrenner bekannt, welcher ein Formstück umfaßt, welches aus gebundenen vorgetrockneten, wärmebehandelten Submikro-Durchmesser-Keramikfasern besteht.

Aus der US 4,889,481 ist ein Brenner bekannt, welcher eine erste Schicht eines porösen Keramikmaterials und eine zweite Schicht eines porösen Keramikmaterials umfaßt.

Aus der US 3,155,142 ist ein Gasbrenner bekannt, welcher eine keramische Strahlungsplatte, eine getrennte Zuführplatte und eine keramische Verbrennungsplatte umfasst.

Der Erfindung liegt die Aufgabe zugrunde, eine Porenkörpereinrichtung der eingangs genannten Art bereitzustellen, welche eine hohe Lebensdauer aufweist.

Diese Aufgabe wird bei der Porenkörpereinrichtung der eingangs genannten Art erfindungsgemäß dadurch gelöst, daß der erste Bereich und der zweite Bereich miteinander verbunden sind und daß eine Wellenlage zwischen beabstandeten Decklagen angeordnet ist

Eine Porenkörpereinrichtung ist hohen zyklischen thermomechanischen Belastungen unter korrosiven Bedingungen ausgesetzt. Durch die Verwendung eines carbidkeramischen Grundwerkstoffs läßt sich eine hohe Lebensdauer auch im Dauerbetrieb eines entsprechenden Porenkörpers erreichen. Wenn der erste Bereich und der zweite Bereich das gleiche carbidkeramische Material umfassen, dann ist ein "thermal mismatch" zwischen den beiden Bereich vermieden, das heißt die thermophysikalischen Eigenschaften der beiden Bereiche sind im wesentlichen gleich. Dadurch entstehen keine Nachteile aufgrund unterschiedlicher thermischer Ausdehnung und unterschiedlicher Wärmeleitfähigkeit.

Es ist vorgesehen, daß die Porenkörpereinrichtung mehrlagig aufgebaut ist. Dadurch läßt sich eine bezüglich der Funktionalität des ersten Bereichs und des zweiten Bereichs optimierte Struktur herstellen. Es lassen sich beispielsweise plattenförmige Porenkörpereinrichtungen oder zylinderförmige Porenkörpereinrichtungen herstellen. Es können insbesondere auch großflächige Strukturen mit Abmessungen größer 500 mm hergestellt werden.

Zwischen beabstandeten Decklagen ist eine Wellenlage angeordnet, welche eine mindestens in einer Richtung variierende lokale Höhe aufweist. Die lokale Höhe variiert insbesondere periodisch. Die Wellenlage weist dadurch eine Abfolge von Wellentälern und Wellenbergen auf, wobei zwischen Wellentälern und Wellenbergen Makroporen oder Kanäle gebildet sind, durch die Gas strömen kann. Durch die Amplitude von Wellen einer Wellenlage (die doppelte Höhe zwischen Wellentäler und Wellenbergen), die Ausrichtung der Poren bzw. Kanäle und die Wellenzahl (Anzahl der Wellentäler bzw. Wellenberge pro Längeneinheit) lassen sich definierte Eigenschaften für die Verbrennungszone und die Vorwärmzone einstellen. Die Wellenlagen lassen sich auf einfache Weise beispielsweise mittels eines Gewebegitters herstellen. Eine Wellenlage wird beispielsweise durch Warmverformung von einer oder mehreren Gewebelagen hergestellt. Zusätzlich kann eine Harzverstärkung oder dergleichen vorgesehen sein.

Der erste Bereich und der zweite Bereich muß das carbidkeramische Material nicht unbedingt im quantitativ gleichen Umfange und/oder in der gleichen Zusammensetzung enthalten.

Die Porenkörpereinrichtung ist im zyklischen Dauerbetrieb eines Porenbrenners hohen thermomechanischen Spannungen ausgesetzt. Dadurch besteht die grundsätzliche Gefahr, daß sich Risse bilden können, wobei zunächst gebildete Mikrorisse sich zu Makrorissen entwickeln können. Wenn der erste Bereich und der zweite Bereich aus einem faserverstärkten carbidkeramischen Material hergestellt sind, dann lassen sich solche Risse vermeiden bzw. die Rißausbildung läßt sich verhindern. Dadurch wiederum läßt sich die Lebensdauer erhöhen.

Insbesondere umfassen der erste Bereich und der zweite Bereich jeweils SiC.

Ganz besonders vorteilhaft ist es, wenn der erste Bereich und der zweite Bereich aus SiC hergestellt sind mit einer Kohlenstoff-Faserverstärkung. Durch die Faserverstärkung läßt sich die Rißbildung im Vergleich zu monolithischen Keramiken herabsetzen bzw. die Rißausbreitung läßt sich verhindern. Dadurch ergibt sich eine hohe Lebensdauer der entsprechenden Porenkörpereinrichtung.

Als Faserverstärkung sind Fasern in der Form von Kurzfasern und/oder Langfasern und/oder Gewebe eingesetzt. Die Fasern bzw. das Gewebe sind insbesondere aus Kohlenstoff und/oder SiC und/oder SiBNC hergestellt.

Ganz besonders vorteilhaft ist es, wenn an dem carbidkeramischen Material mindestens teilweise eine Oxidschicht angeordnet ist. Eine solche Oxidschicht läßt sich beispielsweise mittels Oxidation bei hohen Temperaturen (ab ca. 900°C) an Luft ausbilden. Die Oxidschicht stellt eine Oxidationsschutzschicht bereit. Bei den hohen Temperaturen, wie sie in einer Brennkörpereinrichtung im Betrieb eines Porenbrenner auftreten können, können lufthaltige und andere wasserhaltige Verbrennungsgase zu unerwünschten Reaktionen und vor allem zur Oxidation mit der großen inneren Oberfläche der Porenkörpereinrichtung führen. Es kann dabei ein Massenverlust eintreten, der zu einem Festigkeitsverlust und zu einem Auseinanderbrechen der Porenkörpereinrichtung führen kann. Durch eine Oxidschicht läßt sich ein Schutz gegenüber Oxidation bereitstellen. Die Oxidation kann prinzipiell vor oder nach Beschichtung mit einer Korrosions- / Oxidationsschutzschicht durchgeführt werden. Im ersten Fall besteht das Problem, daß der Kohlenstoff von Kohlenstofffasern reagieren kann und dadurch die Faserstruktur verloren geht.

Weiterhin ist es vorteilhaft, wenn zusätzlich oder alternativ eine Oberfläche des ersten Bereichs und/oder des zweiten Bereichs mindestens teilweise mit einer Korrosions- / Oxidationsschutzschicht versehen ist. Dadurch läßt sich eine Oxidation und Korrosion einer Porenbrennerstruktur insbesondere in der Verbrennungszone C verhindern.

Insbesondere ist die Korrosions- / Oxidationsschutzschicht als keramische Schicht ausgebildet, um auch bei den hohen Temperaturen in der Porenkörpereinrichtung einen guten Schutz zu erhalten.

Beispielsweise ist eine Oxidations- / Korrosionsschutzschicht aus Cordierit und/oder Yttriumsilikat vorgesehen. Solche korrosionsbeständigen Schichten lassen sich beispielsweise mittels Vakuumplasmaspritzen aufbringen. Sie haften gut auf einem kohlenstofffaserverstärkten SiC-Substrat und bilden nahezu rißfreie Oberflächen aus.

Günstigerweise ist der zweite Bereich mit mindestens einer Ausnehmung für einen Zünder versehen. Eine solche Ausnehmung läßt sich beispielsweise vor der Silicierung über Bohrung einbringen. Sie kann an einer vorgegebenen Stelle angeordnet werden, um eine definierte Zündung von Verbrennungsgasen zu erreichen.

Der erste Bereich und der zweite Bereich unterscheiden sich bezüglich Porenverteilung und/oder Porosität und/oder Porenausrichtung und/oder Porengröße. Der erste Bereich und der zweite Bereich lassen sich getrennt bezüglich seiner Funktionalität optimieren. Beispielsweise läßt sich der erste Bereich auch als Rückschlagsperre ausbilden, um einen Verbrennungsrückschlag zu verhindern. Der zweite Bereich wird so ausgebildet, daß in ihm eine optimierte Verbrennung stattfindet.

Insbesondere liegt die Porosität im ersten Bereich zwischen 20 Volumen-% und 30 Volumen-%. Weiterhin ist es günstig, wenn im ersten Bereich Poren einer mittleren Größe kleiner 2 mm vorliegen. Dadurch läßt sich einerseits eine Vorwärmung von Gas, welches durch den ersten Bereich strömt, erreichen. Weiterhin läßt sich der erste Bereich als Rückschlagsperre ausbilden, wobei insbesondere verhindert wird, daß bereits in dem ersten Bereich eine Verbrennung stattfindet.

Ferner ist es günstig, wenn im zweiten Bereich Poren einer mittleren Größe von 2 mm bis 8 mm vorliegen und die Porosität im zweiten Bereich größer 80 Volumen-% ist und insbesondere größer 84 Volumen-% ist. Dadurch läßt sich eine definierte Verbrennung in dem zweiten Bereich (in der Verbrennungszone) erreichen.

Insbesondere sind der erste Bereich und der zweite Bereich miteinander verbunden. Dadurch läßt sich eine kompakte Porenkörpereinrichtung herstellen mit einem optimierten Anschluß zwischen dem ersten Bereich und dem zweiten Bereich.

Es kann vorgesehen sein, daß eine Lage mittels eines Gewebes hergestellt ist. Je nach Position bzw. Funktionalität der entsprechenden Lage kann das Gewebe offenporös sein oder dicht sein. Mittels offenporösen Gewebegittern kann eine offene Porosität in allen drei Raumrichtungen hergestellt werden.

Es kann dabei vorgesehen sein, daß die Gesamthöhe der Wellenlage im wesentlichen konstant ist. Dadurch läßt sich eine Wellenlage zwischen ebenen Decklagen einfassen.

Bei einer Ausführungsform ist ein mehrlagiger gravierter Aufbau vorgesehen. Unterschiedliche Lagen weisen dabei unterschiedliche Eigenschaften auf. Dadurch läßt sich eine optimierte Anpassung der Porenkörpereinrichtung an die Anwendung erzielen. Insbesondere läßt sich eine Verbrennungszone getrennt von einer Vorwärmzone ausbilden und optimieren.

Mindestens einer der folgenden Parameter wird dabei variiert: Maschenweite und/oder Gitterweite eines Gewebes; Gesamthöhe einer Wellenlage; Wellenzahl einer Wellenlage; Dicke einer Lage; K-Zahl eines Gewebes; thermische Leitfähigkeit eines Gewebes; thermische Vorbehandlung eines Gewebes; SiC-Gehalt. Die K-Zahl des Gewebes gibt die Anzahl von Filamenten pro Faserbündel (in Tausend) an. Bei hohen Temperaturen unter Inertgas ausgelagerte Gewebe lassen sich besser zu SiC konvertieren; die thermische Auslagerung führt zu einer Veränderung der Oberfläche von Fasern, was wiederum zu einer erhöhten Umwandlung von Kohlenstoff in SiC während der Silicierung führen kann. Dadurch ist grundsätzlich eine Einzelfasersilicierung ermöglicht, das heißt ein Einzelfaserschutz ermöglicht.

Es kann dabei vorgesehen sein, daß von einem äußeren Ende des ersten Bereichs zu einem äußeren Ende des zweiten Bereichs die Wellenzahl abnimmt. Die Abnahme kann kontinuierlich oder stufenweise erfolgen. Es können auch Gebiete vorgesehen sein, in welchen die Wellenzahl nicht abnimmt. Dadurch läßt sich insbesondere für den ersten Bereich eine Mikroporosität einstellen (mit Porengrößen kleiner 2 mm) und für den zweiten Bereich läßt sich eine Makroporosität (mit Porengrößen insbesondere zwischen 2 mm und 8 mm) einstellen.

Aus dem gleichen Grund ist es günstig, wenn ausgehend von einem äußeren Ende des ersten Bereichs zu einem äußeren Ende des zweiten Bereichs die Wellenhöhe (Amplitude) zunimmt. Dadurch läßt sich die Größe von inneren Hohlräumen in der Verbrennungszone im Vergleich zu der Vorwärmzone erhöhen.

Günstig ist es auch, wenn im ersten Bereich hochfeste Kohlenstoffasern eingesetzt sind. Hochfeste Kohlenstoffasern haben in der Regel eine geringere Wärmeleitfähigkeit; dadurch ist für eine effektive Vorwärmung in der Vorwärmzone gesorgt.

Es ist dann günstig, wenn im zweiten Bereich wärmeleitfähige Pechfasern eingesetzt sind. Diese sorgen für eine hohe Wärmeableitung insbesondere radial zu der Abfolgerichtung. Dadurch läßt sich effektiv Wärme abgeben.

Günstig ist es auch, wenn von einem äußeren Ende des ersten Bereichs zu einem äußeren Ende des zweiten Bereichs die K-Zahl von verwendetem Gewebe zunimmt. Dadurch läßt sich eine erhöhte Temperaturwechselbeständigkeit insbesondere für den zweiten Bereich erreichen.

Ferner ist es günstig, wenn im ersten Bereich nicht vorbehandeltes Gewebe eingesetzt ist. Dadurch läßt sich ein kleinerer SiC-Gehalt einstellen mit entsprechend verringerter Festkörper-Wärmeleitfähigkeit.

Es ist dann günstig, wenn in dem zweiten Bereich vorbehandeltes Gewebe eingesetzt ist. Dadurch läßt sich ein hoher SiC-Gehalt einstellen mit entsprechend guter Festkörperwärmeleitfähigkeit.

Weiterhin ist es günstig, wenn ausgehend von einem äußeren Ende des ersten Bereichs zu einem äußeren Ende des zweiten Bereichs die Maschenweite von eingesetztem Gewebe zunimmt. Dadurch lassen sich Makrohohlräume im zweiten Bereich ausbilden, innerhalb welchen eine Verbrennung stattfinden kann. Weiterhin ist für eine gute Gasströmung gesorgt.

Ganz besonders vorteilhaft ist es, wenn die Faserorientierung quer zu einer Abfolgerichtung des zweiten Bereichs auf den ersten Bereich ist. Dadurch ist für eine Wärmeleitfähigkeit in radialer Richtung (senkrecht zur Abfolgerichtung) gesorgt. Weiterhin läßt sich ein laminarer Aufbau auf einfache Weise herstellen.

Bei einer Ausführungsform sind der erste Bereich und der zweite Bereich stoffschlüssig miteinander verbunden. Es werden dazu Vorkörper vom ersten Bereich und dem zweiten Bereich getrennt hergestellt und dann stoffschlüssig miteinander verbunden.

Insbesondere weist der zweite Bereich Poren und/oder Kanäle auf, welche über Wellenlagen hergestellt sind. Dadurch lassen sich Makrohohlräume bereitstellen.

Ganz besonders vorteilhaft ist es, wenn die Poren und/oder Kanäle parallel oder in einem Winkel größer 0° zu einer Abfolgerichtung des zweiten Bereichs auf den ersten Bereich hergestellt sind. Durch die Einstellung eines Winkel größer 0° läßt sich ein Strömungswiderstand einstellen; je größer der Winkel, desto größer der Strömungswiderstand. Dadurch läßt sich wiederum die Aufenthaltsdauer von einströmendem Gas erhöhen. Dies kann bei entsprechender Einstellung dazu verwendet werden, um eine vollständige Umsetzung von Gasen in der Verbrennungszone zu erreichen. (Bei kleinem Winkel lassen sich Abgase besser abführen, so daß sich eine erhöhte Lebensdauer ergibt, da die aktive und passive Oxidation vermindert wird. Bei kleinem Winkel (einschließlich des Winkels 0°) können entsprechende Mittel zur Vergrößerung des Strömungswiderstands vorgesehen sein.)

Günstig ist es, wenn für den zweiten Bereich eine Einfassung vorgesehen ist, welcher Kohlenstoffasern umfaßt, welche im wesentlichen parallel zur Abfolgerichtung des zweiten Bereichs auf den ersten Bereich orientiert sind. Dadurch läßt sich eine Wärmeleitfähigkeit parallel zur Abfolgerichtung erzielen.

Es kann zusätzlich eine Formschlußfügung zwischen dem ersten Bereich und dem zweiten Bereich hergestellt sein. Diese wird beispielsweise durch aneinander angepaßte Verzahnungs-Ausnehmungs-Strukturen hergestellt.

Der Erfindung liegt ferner die Aufgabe zugrunde, ein Verfahren zur Herstellung einer erfindungsgemäßen Porenkörpereinrichtung bereitzustellen.

Diese Aufgabe wird erfindungsgemäß dadurch gelöst, daß mindestens eine Platte, welche mindestens eine zwischen Decklagen liegende Wellenlage aufweist, hergestellt wird, aus der mindestens einen Platte Streifen geschnitten werden, und Streifen über Decklagenbereiche zu einem Fügeverbund gefügt werden.

Es lassen sich dadurch Kanäle bzw. Poren ausbilden, welche eine Orientierung parallel oder in einem Winkel zur Abfolgerichtung zwischen dem zweiten Bereich und dem ersten Bereich aufweisen. Die Orientierung ist dadurch nicht mehr eingeschränkt auf eine Richtung senkrecht zur Abfolgerichtung. Es lassen sich dadurch auf einfache Weise Makrohohlräume und Makroporen bzw. Makrokanäle einstellen, um eine optimierte Verbrennungszone bereitzustellen.

Insbesondere lassen sich Kanäle mit einem definierten Winkel orientieren, um einen definierten Strömungswiderstand herzustellen. Dadurch wiederum läßt sich die Aufenthaltsdauer von Gas in der Verbrennungszone erhöhen, um so für eine vollständige Umsetzung eines Brennstoffgemisches zu sorgen.

Insbesondere werden die Streifen bezogen auf ihre Position in der mindestens einen Platte vor der Fügung um 90° gedreht. Dadurch lassen sich die geschnittenen Streifen neu zusammensetzen, wobei die Orientierung von Kanälen bzw. Poren geändert wurde.

Günstig ist es, wenn die Streifen in einer Schnittebene geschnitten werden, welche in einem Winkel zu einer Wellenrichtung liegt. Je nach Winkellage läßt sich dadurch eine definierte Kanalorientierung bzw. Makroporenorientierung herstellen.

Die Breite der zu fügenden Streifen ist dann durch die Dicke der mindestens einen Platte bestimmt. Es können so beispielsweise aus mehreren Platten unterschiedlicher Dicke unterschiedliche Fügeverbunde hergestellt werden, die dann wiederum beispielsweise über Deckplatten miteinander verbunden werden.

Insbesondere wird die mindestens eine Platte als Vorkörper für ein Carbidkeramik-Werkstück hergestellt. Insbesondere ist sie als Kohlenstoffkörper mit einer Faserverstärkung in der Form von Langfasern und/oder Kurzfasern und/oder Gewebeverstärkung hergestellt.

Günstig ist es dabei, wenn die mindestens eine Platte mittels offenporösem Kohlenstoffgewebe hergestellt wird. Es läßt sich dadurch ein Porenkörper mit dreidimensionaler Porosität in dem Sinne herstellen, daß ein Gasfluß in alle drei Raumrichtungen erfolgen kann.

Es kann vorgesehen sein, daß eine Pyrolyse vor Schneiden der mindestens einen Platte durchgeführt wird.

Die Streifen zur Herstellung des Fügeverbunds werden beispielsweise mittels Harz und/oder SiC-Precursor gefügt. Bei einer anschließenden Silicierung läßt sich eine feste Verbindung zwischen den Streifen erzielen. Auf diese Weise läßt sich insbesondere ein mehrlagiger Aufbau einer Plattenkörpereinrichtung erzielen.

Der Erfindung liegt ferner die Aufgabe zugrunde, einen Porenbrenner bereitzustellen, welcher hohe Standzeiten aufweist.

Diese Ausgabe wird erfindungsgemäß dadurch gelöst, daß eine Porenkörpereinrichtung der erfindungsgemäßen Art eingesetzt wird und/oder eine Porenkörper einrichtung eingesetzt wird, welche gemäß dem erfindungsgemäßen Verfahren hergestellt wurde.

Insbesondere ist die Porenkörpereinrichtung in einem Gehäuse angeordnet. Das Gehäuse ist beispielsweise aus einem metallischen Material hergestellt. Es kann auch aus einem keramischen Material und insbesondere carbidkeramischen Material hergestellt sein. Insbesondere ist es aus dem gleichen Material wie die Porenkörpereinrichtung hergestellt. Beispielsweise wird dazu ein Gehäuse-Vorkörper hergestellt, welcher vor der Silicierung mit einem Porenkörpereinrichtung-Vorkörper verbunden wird (beispielsweise über eine Kohlenstoffpaste). Diese Einheit aus Gehäuse- und Porenkörper-Vorkörper wird dann siliciert.

In einer Ausnehmung im zweiten Bereich ist vorzugsweise ein Zünder angeordnet, um ein Gasgemisch zünden zu können.

Ganz besonders vorteilhaft ist es, wenn an den zweiten Bereich ein keramischer Wärmeübertrager angefügt ist. Es kann sich dabei um einen Plattenwärmeübertrager handeln. Dieser ist insbesondere aus dem gleichen Material hergestellt wie der zweite Bereich. Es läßt sich dann direkt Abgas von dem zweiten Bereich in den Wärmeübertrager einkoppeln.

Die nachfolgende Beschreibung bevorzugter Ausführungsformen dient im Zusammenhang mit der Zeichnung der näheren Erläuterung der Erfindung. Es zeigen:
- Figur 1: eine schematische Schnittansicht eines Ausführungsbeispiels eines Porenbrenners mit einer Porenkörpereinrichtung;
- Figuren 2(a), 2(b), 2(c), 2(d), 2(e): verschiedene Verfahrensschritte bei einem Ausführungsbeispiel zur Herstellung einer erfindungsgemäßen Porenkörpereinrichtung;
- Figur 3: eine schematische Darstellung des Aufbaus eines weiteren Ausführungsbeispiels einer erfindungsgemäßen Porenkörpereinrichtung;
- Figur 4: eine Schnittansicht längs der Linie 5-5 und
- Figur 5: eine schematische Darstellung eines Teilbereichs eines Ausführungsbeispiels einer erfindungsgemäßen Porenkörpereinrichtung.

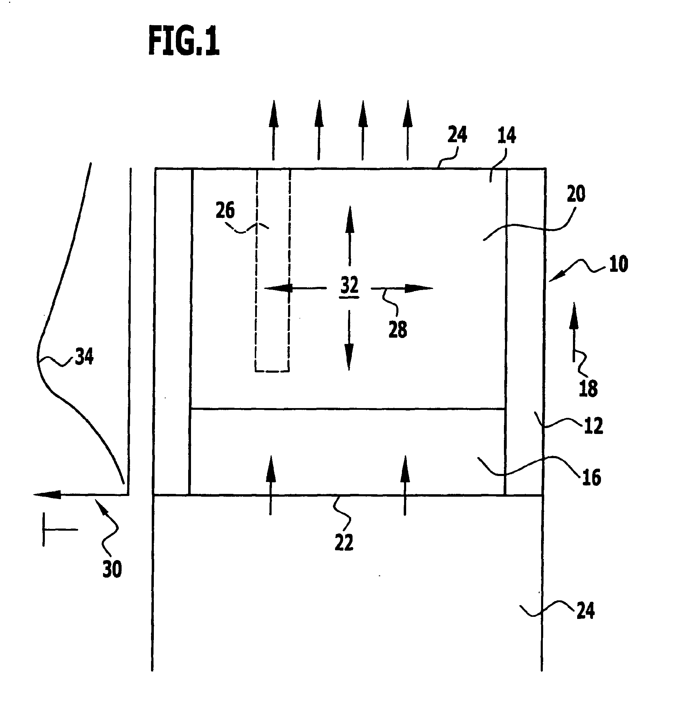

Ein Ausführungsbeispiel eines Porenbrenners, welches in Figur 1 gezeigt und dort mit 10 bezeichnet ist, umfaßt ein Gehäuse 12, welches beispielsweise aus einem metallischen Material oder keramischen Material (und insbesondere carbidkeramischen Material) hergestellt ist. In dem Gehäuse 12 ist eine Porenkörpereinrichtung 14 angeordnet.

Die Porenkörpereinrichtung 14 umfaßt einen ersten Bereich 16, welcher als Vorwärmzone und als Rückschlagzone (Rückschlagsperre) ausgebildet ist. Dieser erste Bereich 16 wird auch als A-Zone bezeichnet.

In einer Abfolgerichtung 18 schließt sich an den ersten Bereich 16 ein zweiter Bereich 20 an, welcher als Verbrennungszone ausgebildet ist. Dieser zweite Bereich 20 wird auch als C-Zone bezeichnet.

Über den ersten Bereich 16 werden Verbrennungsgase dem zweiten Bereich 20 zugeführt. Dazu weist der erste Bereich ein äußeres Ende 22 auf, welches mit einer Zuführungseinrichtung 24 für die Verbrennungsgase in fluidwirksamer Verbindung steht.

In dem zweiten Bereich 20 findet die Verbrennung statt. Über ein äußeres Ende 24 des zweiten Bereichs 20 werden Abgase abgeführt. Über dieses Ende 24 wird auch ein Großteil der Prozeßwärme abgeführt.

In dem zweiten Bereich 20 sind ein oder mehrere Ausnehmungen 26 angeordnet, welche insbesondere in Form einer von der Oberfläche der Porenkörpereinrichtung 14 hergestellten Bohrung ausgebildet sind. In einer solchen Ausnehmung 26 ist ein Zünder (wie eine Zündkerze oder Zündelektrode) zur Zündung der Verbrennungsgase angeordnet.

Über das Ende 22 des ersten Bereichs 16 strömt ein Gasgemisch durch den ersten Bereich 16 hindurch und wird dort vorgewärmt. Als Gasgemisch wird beispielsweise ein Erdgas-Luft-Gemisch eingesetzt. Das vorgewärmte Gasgemisch strömt dann in den zweiten Bereich 20 ein. Dort erfolgt die Verbrennung des Gasgemisches, gezündet durch den Zünder in der Ausnehmung 26. Aus der Verbrennungszone (Reaktionszone) wird Wärme durch Strahlung und durch Wärmeleitung in dem zweiten Bereich 20 sowie durch konvektiven Wärmeübergang und Dispersion abgeführt. Die Wärmeabfuhr erfolgt dabei nach allen Seiten (angedeutet in Figur 1 durch die Pfeile mit dem Bezugszeichen 28).

In Figur 1 ist schematisch mit dem Diagramm 30 ein typischer Temperaturverlauf für die Verbrennung in der Porenkörpereinrichtung 14 gezeigt: Der erste Bereich 16 wird durch die in einer Reaktionszone 32 des zweiten Bereichs 20 erzeugte Wärme vorgewärmt; ausgehend von dem Ende 22 nimmt daher in der Abfolgerichtung 18 die Temperatur zu. In der Reaktionszone selber erreicht die Temperatur ihr Maximum 34. Zu dem äußeren Ende 24 des zweiten Bereichs 20 nimmt die Temperatur wieder ab.

Porenbrenner sind beispielsweise in dem Artikel "Porenbrenner in der Energie-und Wärmetechnik" von F. Durst et al., Bulletin SEV/VSE 21/98, Seiten 11 bis 18 beschrieben.

Der erste Bereich 16 und der zweite Bereich 20 sind miteinander verbunden.

Erfindungsgemäß ist es vorgesehen, daß sowohl der erste Bereich 16 als auch der zweite Bereich 20 durch das gleiche carbidkeramische Material hergestellt sind und insbesondere aus faserverstärktem SiC hergestellt sind. Bei der Faserverstärkung handelt es sich insbesondere um Kohlenstoffasern und/oder Kohlenstoffgewebe, so daß der erste Bereich 16 und der zweite Bereich 20 aus C/SiC hergestellt sind. Auch SiC-Fasern oder SiC-Gewebe können eingesetzt werden. Auch SiBNC-Fasern und SiBNC-Gewebe kann eingesetzt werden.

Das Material SiC mit Kohlenstofffaser-Verstärkung erfüllt die Voraussetzungen, die für einen Porenbrenner erforderlich sind insbesondere bezüglich Temperaturwechselbeständigkeit, Thermoschockbeständigkeit und Korrosionsbeständigkeit oberhalb von Temperaturen von ca. 1200°C.

Beispielsweise kann es in dem ersten Bereich 16 zu örtlichen Temperaturgradienten von einigen 100 K kommen; diese hohen Temperaturgradienten sind durch die schnelle Aufheizung auf die Maximaltemperatur innerhalb einer kurzen Zeit begründet.

Durch die Verwendung von carbidkeramischen Materialien, welche insbesondere faserverstärkt sind, lassen sich der erste Bereich 16 und der zweite Bereich 20 getrennt optimieren, um so eine optimierte Porenkörpereinrichtung 14 herstellen zu können.

Insbesondere ist für den ersten Bereich eine offene Porosität im Bereich zwischen 20 Volumen-% und 30 Volumen-% eingestellt. Es lassen sich in dem ersten Bereich 16 Mikroporen mit einer Porengröße kleiner ca. 2 mm herstellen. Weiterhin läßt sich für den ersten Bereich 16 ein gutes Thermoschockverhalten erreichen. Darüber hinaus ist es möglich, eine geringe Wärmeleitfähigkeit insbesondere in axialer Richtung (parallel zur Abfolgerichtung 18) herzustellen. Dadurch läßt sich der erste Bereich 16 optimiert als Vorwärmzone und Rückschlagsperre ausbilden.

Für den zweiten Bereich 20 läßt sich eine offene Porosität größer 80 Volumen-% und insbesondere größer 85 Volumen-% einstellen. Es sind Makroporen mit Porengrößen im Bereich zwischen 3 mm bis 7 mm bereitgestellt. Es läßt sich dabei ein geringer thermischer Ausdehnungskoeffizient einstellen.

Weiterhin ist es möglich, eine hohe Wärmeleitfähigkeit in radialer Richtung (senkrecht zur Abfolgerichtung 18) zu erzielen und damit die Wärmeabgabe der Porenkörpereinrichtung 14 zu optimieren. Weiterhin läßt sich ein guter Gastransport quer zur Abfolgerichtung 18 herstellen.

Dadurch, daß für den ersten Bereich 16 und den zweiten Bereich 20 grundsätzlich der gleiche Werkstoff eingesetzt wird, liegen gleiche oder zumindest sehr ähnliche thermophysikalische Eigenschaften vor. Durch den kohlenstofffaserverstärkten SiC-Werkstoff ist eine hohe Schockbeständigkeit und eine hohe Belastbarkeit bezüglich thermomechanischen Spannungen vorgegeben.

Erfindungsgemäß ist es ferner vorgesehen, daß der Werkstoff des ersten Bereichs 16 und des zweiten Bereichs 20 mit einer Oxidschicht und/oder einer Korrosions- / Oxidationsschutzschicht versehen ist.

Die Oxidschicht wird beispielsweise dadurch hergestellt, daß nach der Silicierung des entsprechenden Werkstücks zur Herstellung des ersten Bereichs 16 und/oder des zweiten Bereichs 20 und/oder der Kombination des ersten Bereichs 16 und des zweiten Bereichs 20 mittels Oxidation bei einer Temperatur von ca. 1000°C an Luft passiviert wird. Dadurch bildet sich auf dem SiC eine dünne Oxidschicht aus; diese ist wenige Mikrometer dick. Bei diesem Verfahrensschritt wird auch der noch nicht reagierte und von der Oberfläche her zugängliche Kohlenstoff entfernt.

Als Korrosions- / Oxidationsschutzschicht ist insbesondere eine keramische Beschichtung vorgesehen. Beispielsweise werden Cordierit (welches auch als Dichorit bezeichnet wird und die Summenformel Mg₂Al₃[AlSi₅ O₁₈] bzw. 2MgO · 2Al₂O₃ · 5SiO₂ hat) oder Yttriumsilikate (YSiO₅ oder Y₂SiO₇) eingesetzt. Solche Schichten lassen sich beispielsweise mittels Vakuumplasmaspritzen aufbringen. Sie haften auf dem kohlenstofffaserverstärkten SiC-Substrat und bilden nahezu rißfreie Oberflächen aus.

Vorzugsweise wird die Oxidation nach der Herstellung der Korrosions- / Oxidationsschutzschicht durchgeführt. Dadurch läßt sich eine "Zerstörung" der Kohlenstofffasern durch oxidische Reaktion des Kohlenstoffs der Fasern verhindern oder zumindest reduzieren.

Die Oxidation ist ein fakultativer Verfahrensschritt, auf den auch verzichtet werden kann.

Bei einer ersten Ausführungsform zur Herstellung einer erfindungsgemäßen Porenkörpereinrichtung wird beispielsweise ein CFK-Körper einer Pyrolyse unterzogen. Als Resultat der Pyrolyse ergibt sich ein kohlenstofffaserverstärkter Vorkörper. Dieser wird siliciert, so daß sich ein kohlenstofffaserverstärkter Siliciumcarbid-Körper ergibt. Dieser kann noch Restkohlenstoffanteile enthalten. Durch Oxidation dieses Körpers kann der freie Kohlenstoff reagieren. Weiterhin kann der Kohlenstoff der Fasern reagieren. Es entsteht dadurch, wenn genügend lange oxidiert wird, ein SiC-Körper ohne freien Kohlenstoffanteil mit einer "aufgelösten" Faserstruktur.

Ein solcher SiC-Körper läßt sich dann mit einer Korrosions- / Oxidationsschutzschicht beispielsweise aus Cordierit beschichten. Das Ergebnis ist ein Körper aus monolithischem SiC mit einer Beschichtung.

Bei einer zweiten Ausführungsform wird ein CFK-Vorkörper der Pyrolyse unterzogen und anschließend siliciert. Ohne vorherige Oxidation wird dieser kohlenstofffaserverstärkter SiC-faserverstärkter Körper mit einer Korrosions- / Oxidationsschutzschicht versehen.

Das Resultat ist ein Körper aus kohlenstofffaserverstärktem SiC, wobei dieser Körper auch noch freien Kohlenstoff enthalten kann.

Bei einer dritten Ausführungsform wird ein SiC-Gewebe bzw. ein SiBNC-Gewebe bzw. ein entsprechendes Fasergelege mit einem SiC-Precursor der Pyrolyse unterzogen. Die Ausgangsstruktur kann dabei in Wellenform vorliegen oder auch als ebenes Gelege.

Als Resultat der Pyrolyse ergibt sich ein SiC/SiC-Körper, welcher SiC-Fasern enthält, die in einer SiC-Hülle liegen.

Dieser Körper wird dann mit einer Korrosions- / Oxidationsschutzschicht versehen, wobei zuvor optional eine Oxidation durchgeführt werden kann.

Das Resultat ist ein SiC-faserverstärkter SiC-Körper mit Beschichtung.

Im letzteren Falle ist keine Silicierung notwendig.

Erfindungsgemäß ist ein mehrlagiger Aufbau der Porenkörpereinrichtung 14 vorgesehen, wobei der mehrlagige Aufbau insbesondere mindestens eine Wellenlage umfaßt, welche zwischen Decklagen angeordnet ist. Über Variation insbesondere der Wellenhöhe (Amplitude) und Wellenanzahl (der Anzahl von Wellenbergen bzw. Wellentälern pro Flächeneinheit) lassen sich gradierte Porenkörpereinrichtungen 14 aufbauen bzw. es lassen sich symmetrische oder asymmetrische Strukturen aufbauen. Die Herstellung erfolgt dabei schichtweise.

Bei einem ersten Ausführungsbeispiel werden Vorformen für den ersten Bereich 16 und den zweiten Bereich 20 getrennt hergestellt.

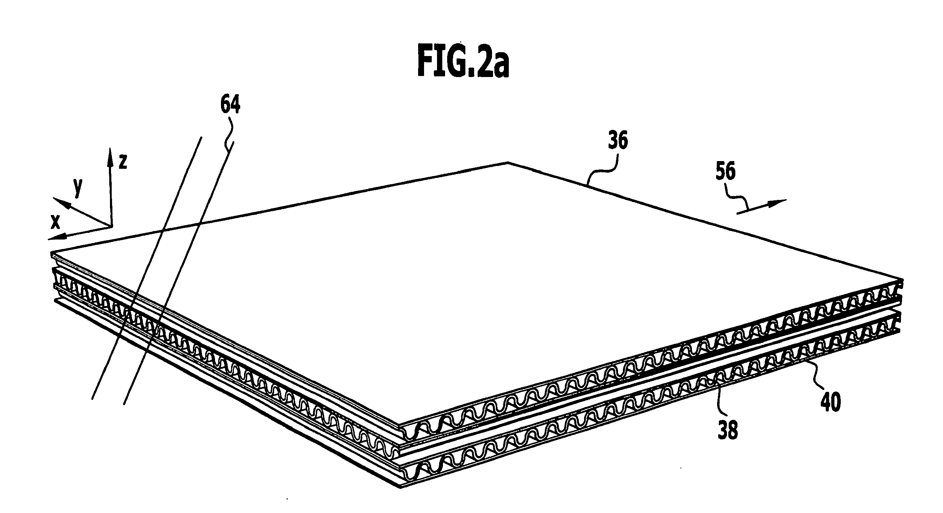

Zur Herstellung des zweiten Bereichs 20 wird, wie anhand der Figuren 2(a) bis 2(d) erläutert, zunächst eine Platte 36 hergestellt, welche eine oder mehrere Wellenlagen 38 und mehrere Decklagen 40 umfaßt. Die Platte 36 umfaßt dabei mindestens eine Wellenlage 38.

Eine solche Wellenlage 38 wird beispielsweise durch Warmverformung eines Gewebes beispielsweise in einem entsprechend geformten Gesenk hergestellt.

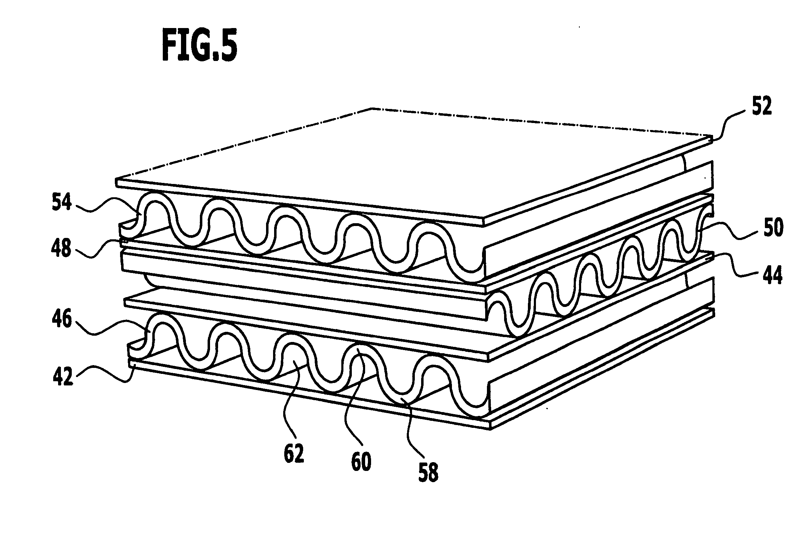

Dies wird anhand von Figur 5 näher erläutert.

Beispielsweise ist zwischen einer ersten Decklage 42 und einer zweiten Decklage 44 eine erste Wellenlage 46 angeordnet. Zwischen der zweiten Decklage 44 und einer dritten Decklage 48 ist eine zweite Wellenlage 50 angeordnet. Zwischen der dritten Decklage 48 und einer vierten Decklage 52 ist eine dritte Wellenlage 54 angeordnet.

Eine Wellenlage 38 ist dadurch charakterisiert, daß in einer Wellenrichtung 56 eine lokale Höhe des Materials der Wellenlage variiert und dabei insbesondere periodisch variiert. Eine Gesamthöhe einer Wellenlage 38 ist bestimmt durch den Abstand zwischen Wellentälern 58 und Wellenbergen 60 senkrecht zur Wellenrichtung 56.

In einer solchen Wellenlage 38 (beispielsweise in der ersten Wellenlage 46) sind zwischen den Wellenbergen 58 und den Wellenbergen 68 Kanäle oder Poren 62 gebildet, durch die Gas strömen kann.

Durch die Amplitude einer solchen Wellenlage 38 (der Abstand zwischen Wellentälern 58 und Wellenbergen 60) ist die Porosität einer entsprechenden Wellenlage 38 bestimmt. Die Wellenzahl gibt die Anzahl der Wellentäler 58 bzw. Wellenberge 60 pro Längeneinheit an.

Durch Variation der Amplitude und der Wellenzahl läßt sich eine definierte Struktur für die Porenkörpereinrichtung 14 einstellen.

Eine solche Platte 36 wird insbesondere mittels offenporösen KohlenstoffGeweben als Einzellagen (Decklagen 40 und Wellenlagen 38) hergestellt. Es kommen insbesondere Prepreg-Lagen zum Einsatz. Ein Vorkörper für die Platte 36 wird sukzessive durch entsprechendes Legen von Lagen hergestellt. Anschließend wird der Vorkörper ausgehärtet und unter Erdgasatmosphäre pyrolysiert.

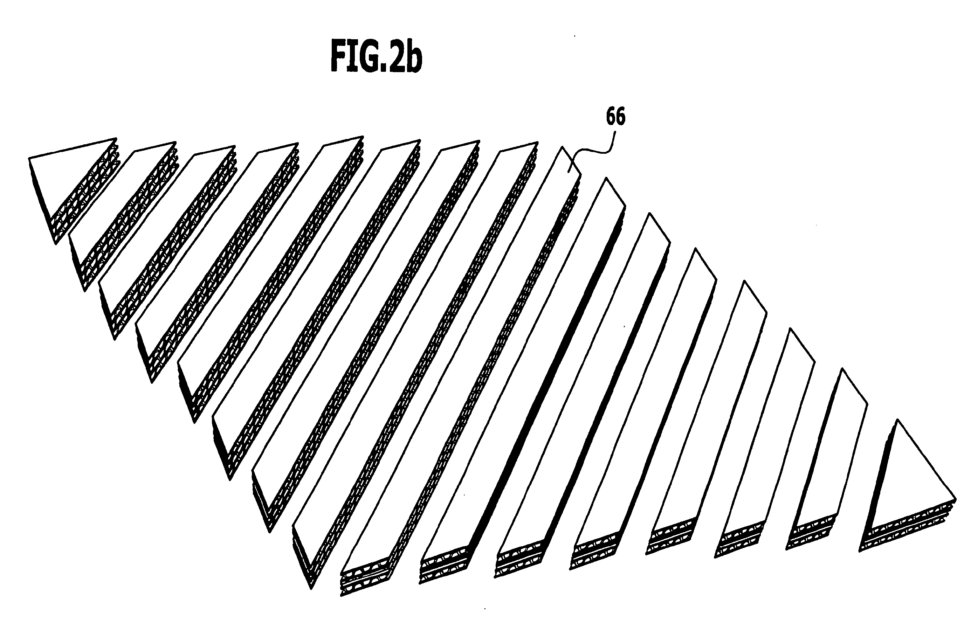

Die entsprechende Platte 36 wird dann in Schnittebenen 64 (Figur 2(a), 2(b)) in parallele Streifen 66 geschnitten, beispielsweise mittels Trennschleifen oder Wasserstrahlschneiden.

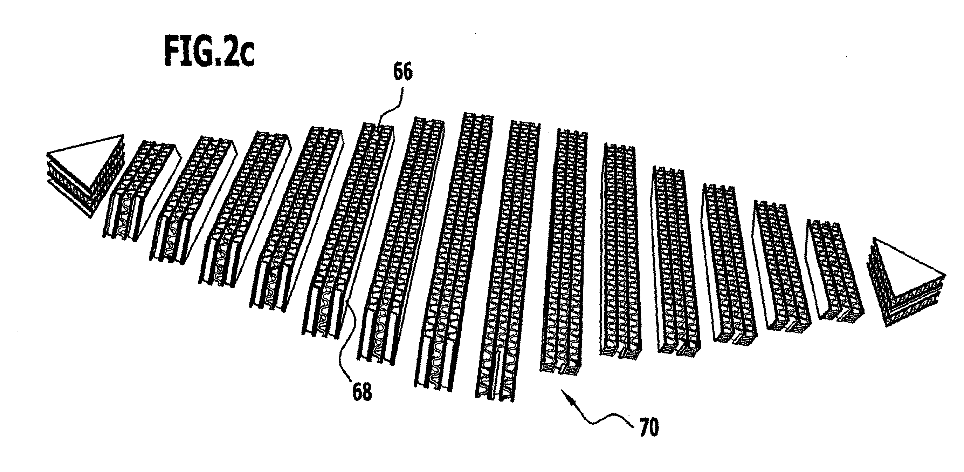

Die entsprechenden Streifen 66 werden dann um 90° gedreht (Figur 2(c)) und über benachbarte Decklagenbereiche 68 gefügt.

Wenn die Schnittebene 64, mit der parallele Streifen 66 geschnitten werden, senkrecht zur Quellenrichtung 56 liegt, dann sind nach der Drehung um 90° die Streifen 66 so orientiert, daß die Kanäle 62 parallel zur Abfolgerichtung 18 (parallel zur z-Richtung) liegen.

Insbesondere ist es vorgesehen, daß die Schnittebene 64 in einem Winkel zur Wellenrichtung 56 liegt. Dadurch liegen auch die Kanäle 62 in dem Streifen 66 nach der Drehung um 90° in einem Winkel zur z-Richtung. Je nach Lage der Schnittebene 64 läßt sich der Winkel der Kanäle 62 bezogen auf die Abfolgerichtung 18 einstellen. Durch entsprechende Einstellung läßt sich die Verbrennung in dem zweiten Bereich 20 steuern. Beispielsweise führt eine Winkellage eines Kanals 62 relativ zur Abfolgerichtung 18 zu einem höheren Strömungswiderstand, wobei der Strömungswiderstand je höher ist, je weiter die Kanäle 62 gegenüber der Abfolgerichtung 18 geneigt sind. Über Erhöhung des Strömungswiderstands kann Gas, welches aus dem ersten Bereich 16 in den zweiten Bereich 20 einströmt, länger in der Verbrennungszone verweilen. Dadurch wiederum läßt sich eine vollständige Umsetzung bei der Verbrennung fördern.

Mittels der gedrehten Streifen 66 läßt sich ein Fügeverbund 70 herstellen (in Figur 2(c) ist dieser Fügeverbund 70 vor der Fügung gezeigt). Die benachbarten Decklagenbereiche des Streifen 66 werden beispielsweise mittels Harz oder SiC-Precursor verbunden.

Ein solcher Fügeverbund 70 läßt sich wiederum bearbeiten, um diesen beispielsweise in Quaderform oder Zylinderform zu bringen. Beispielsweise läßt sich auch eine Bohrung für einen Zünder einbringen.

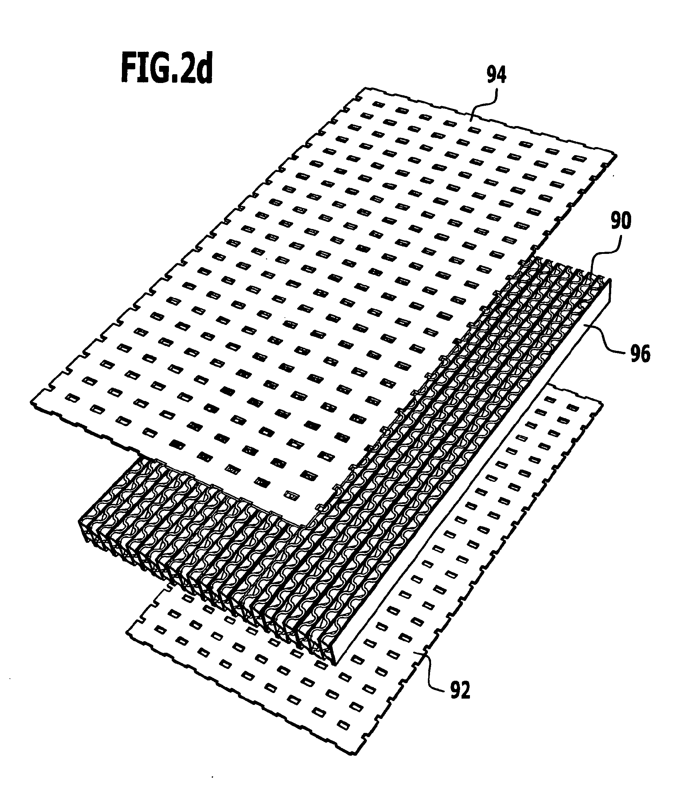

Eine Mehrzahl solcher bearbeiteten Fügeverbunde (in Figur 2(d) ist ein bearbeiteter Fügeverbund 90 gezeigt) läßt sich zusammensetzen, um den Vorkörper für den ersten Bereich 16 zu bilden.

Insbesondere wird ein entsprechend hergestellter Fügeverbund 90 mit Decklagen 92, 94 versehen (Figur 2(d)). Beispielsweise werden ebene Decklagen 92, 94 mit dem Fügeverbund 90 über Harz und/oder SiC-Precursor verbunden.

Es kann insbesondere vorgesehen sein, daß Fügeverbunde 90 mit Decklagen 92, 94 aus einem offenporösen Kohlenstoffgewebe versehen werden.

Weiterhin kann es vorgesehen sein, daß Seitenflächen eines solchen Fügeverbunds 90 oder eine Mehrzahl von Fügeverbunden 90 mit dichtem Kohlenstoff-Gewebe eingefaßt werden (Einfassung 96 in Figur 2(d)). Bei der Einfassung von Seitenflächen sind dabei die Kohlenstoffasern insbesondere in der Abfolgerichtung 18 orientiert, so daß für eine gute Wärmeableitung in der Abfolgerichtung 18 gesorgt ist. Wenn hier noch Fasern mit hoher Wärmeleitfähigkeit wie beispielsweise Pechfasern eingesetzt werden, dann wird die Wärmeleitfähigkeit in der Abfolgerichtung 18 weiter verbessert.

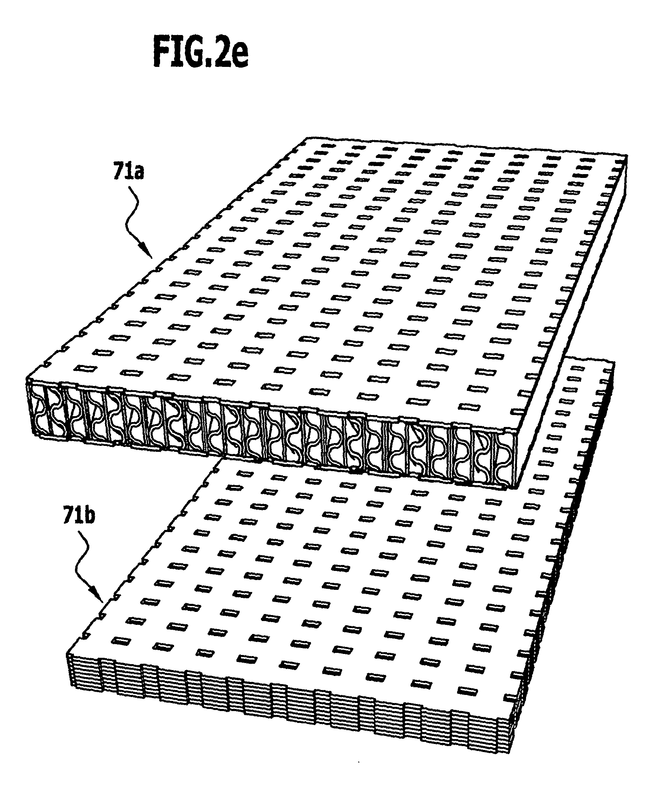

Als Ergebnis resultiert dann ein Vorkörper 71a für den zweiten Bereich 20 (Figur 2(e)).

Ein Vorkörper 71b (Figur 2(e)) für den ersten Bereich 16 läßt sich beispielsweise durch Laminieren oder Pressen von dichten Kohlenstoffgeweben mit kleiner Maschenweite herstellen. Dazu werden beispielsweise entsprechende Prepreg-Gewebe (die insbesondere offenporös sind) aufeinander geschichtet. Die Amplitude von Wellenlagen ist dabei kleiner als für den Vorkörper für den zweiten Bereich 20. Die Wellenzahl ist vorzugsweise größer als für den zweiten Bereich 20.

Es ist grundsätzlich auch möglich, daß beispielsweise Bohrungen in dichtes Gewebe eingebracht werden (beispielsweise durch Metallstifte).

In diesem Vorkörper sind Fasern senkrecht zur Abfolgerichtung 18 ausgerichtet, so daß die Wärmeleitfähigkeit in der Abfolgerichtung 18 gering ist. Insbesondere werden hochfeste Kohlenstoffasern verwendet.

Grundsätzlich ist es auch möglich, durch Schneiden und Fügen aus Platten, wie anhand der Figuren 2(a) bis 2(d) beschrieben, ein Vorkörper für den ersten Bereich 16 herzustellen. Es werden dabei aber Wellenlagen mit kleiner Amplitude (in der Größenordnung 1 mm bis 2 mm) verwendet. Dazu müssen Kohlenstoffgewebe verwendet werden, die geringe K-Zahlen aufweisen wie beispielsweise ein 1K-Gewebe mit 1000 Filamenten pro Faserbündel.

Die entsprechend hergestellten Vorkörper 71b für den ersten Bereich 16 und 71a für den zweiten Bereich 20 werden stoffschlüssig miteinander verbunden (Figur 2(e)). Dazu erfolgt beispielsweise eine Fügung mit einem kohlenstoffhaltigen oder SiC-haltigen Polymer oder mit einer kohlenstoffhaltigen Paste. Diese Fügung erfolgt im Kohlenstoffzustand vor oder nach der Pyrolyse.

Anschließend erfolgt eine Silicierung des Vorkörperverbundes beispielsweise mit flüssigem Silicium (bei einer Temperatur oberhalb von 1420°C) oder mit Silicium-Legierungen. Dadurch erfolgt eine stoffschlüssige Verbindung zwischen dem ersten Bereich 16 und dem zweiten Bereich 20.

Die Silicierung kann beispielsweise auch alternativ oder in Kombination über einen Gasphasenprozeß erfolgen.

Es ist dabei grundsätzlich möglich, daß der Vorkörper für den ersten Bereich 16 und für den zweiten Bereich 20 vor der Fügung noch so bearbeitet werden, daß zusätzlich ein Formschluß erfolgen kann. Insbesondere wird eine Verzahnungs-Ausnehmungs-Struktur an den Vorkörpern zur zusätzlichen formschlüssigen Verbindung hergestellt.

Anschließend kann, wie oben beschrieben, eine Oxidation durchgeführt werden, um eine Oxidschicht herzustellen. Weiterhin läßt sich dann die Korrosions- / Oxidationsschutzschicht herstellen.

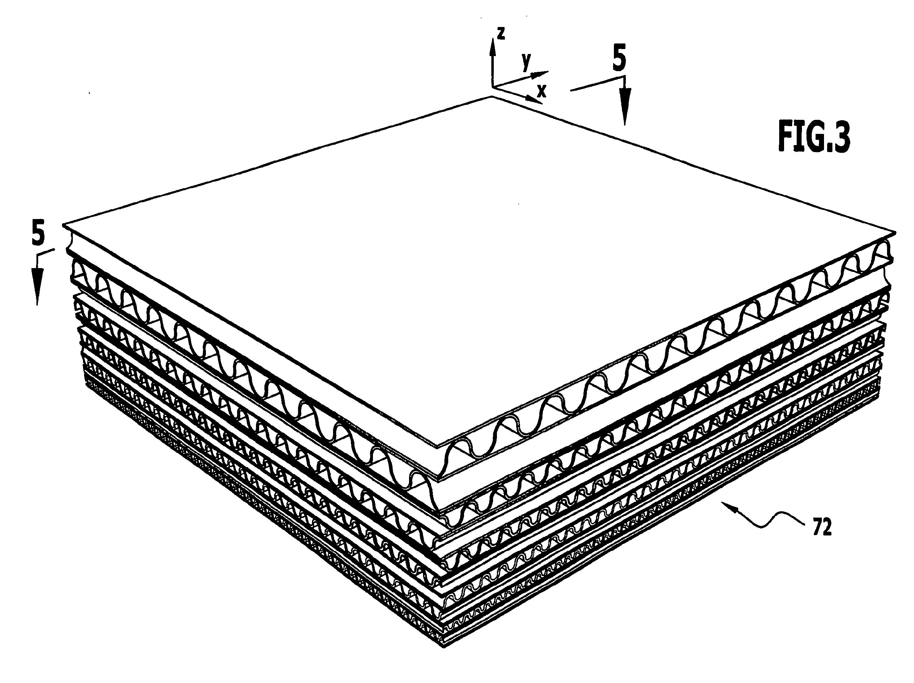

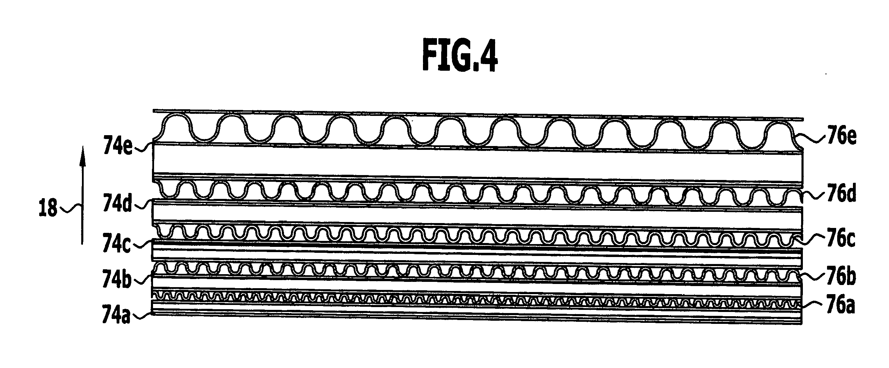

Bei einem weiteren Ausführungsbeispiel ist eine Porenkörpereinrichtung 72 (Figuren 3 und 4) vorgesehen, bei welcher der erste Bereich 16 und der zweite Bereich 20 integral hergestellt sind. Die Porenkörpereinrichtung 72 ist mehrlagig aufgebaut, wobei die entsprechenden Lagen in dem ersten Bereich 16 und dem zweiten Bereich 20 unterschiedliche Eigenschaften aufweisen. Der Lagenaufbau erfolgt sukzessive.

Es werden alternierend Decklagen 74a, 74b, 74c, 74d, 74e, 74f mit dazwischenliegenden Wellenlagen 76a, 76b, 76c, 76d, 76e gelegt, um einen Laminataufbau zu erhalten. Die Decklagen 74a, b, c, d, e, f weisen jeweils unterschiedliche Eigenschaften auf. Ebenfalls weisen die Wellenlagen 76a, 76b, 76c, 76d, 76e unterschiedliche Eigenschaften auf.

Mittels eines solchen Lagenaufbaus läßt sich beispielsweise eine quaderförmige Porenkörpereinrichtung 72 herstellen. Durch Wickeln der entsprechenden Lagen auf beispielsweise Metallrohren oder Graphitrohren läßt sich auch eine zylindrische Porenkörpereinrichtung 72 herstellen.

Je nach Wellenlage wird die Wellenzahl und/oder die Amplitude und/oder Maschen- /Gitterweite des Kohlenstoffgewebes, und/oder die K-Zahl des Gewebes und/oder die Leitfähigkeit und/oder die thermische Gewebevorbehandlung und/oder der SiC-Gehalt variiert. (Der SiC-Gehalt läßt sich dadurch verändern, daß eine Veränderung der Oberfläche des Gewebes erfolgt; bei hohen Temperaturen ausgelagertes Gewebe läßt sich besser zu SiC konvertieren, da die entsprechende veränderte Oberfläche von Fasern des Gewebes zu einer erhöhten Umwandlung von Kohlenstoff in SiC während der Silicierung führt.) Entsprechend läßt sich für die Decklagen die Maschen-/Gitterweite des Gewebes, die K-Zahl des Gewebes, die Leitfähigkeit des Gewebes oder die thermische Gewebevorbehandlung variieren.

Dadurch lassen sich Lagen mit einer Gradientenstruktur in der Abfolgerichtung 18 aufbauen. Insbesondere werden für den ersten Bereich (A-Zone) Wellenlagen mit "größerer" Wellenzahl und "kleinerer" Wellenamplitude vorgesehen. In der Abfolgerichtung 18 und insbesondere in der C-Zone sind dann kleinere Wellenzahlen mit größeren Wellenamplituden vorgesehen, um Makrokanäle bzw. Makroporen für die Reaktionszone bereitzustellen.

Weiterhin kann es vorgesehen sein, daß in dem ersten Bereich 16 hochfeste Kohlenstoffasern vorgesehen sind, während in dem zweiten Bereich 20 hochwärmeleitfähige Pechfasern vorgesehen sind.

Für den ersten Bereich 16 werden vorzugsweise Gewebe kleiner K-Zahl verwendet, während für den zweiten Bereich Gewebe mit großer K-Zahl verwendet werden.

Für den ersten Bereich 16 wird nicht vorbehandeltes Ausgangsgewebe bevorzugt, während für den zweiten Bereich 20 thermisch vorbehandelte Gewebe bevorzugt werden.

Für den ersten Bereich 16 werden engmaschigere Gewebe bevorzugt, während für den zweiten Bereich 20 weitmaschigere Gewebe bevorzugt werden.

Dadurch lassen sich in der C-Zone (das heißt im zweiten Bereich 20) hohe Porositäten mit großer Porengröße einstellen und es läßt sich ein hoher SiC-Gehalt einstellen. In dem ersten Bereich 16 (der A-Zone) läßt sich eine kleine Porosität mit kleiner Porengröße (Mikroporen) mit niedrigem SiC-Gehalt einstellen.

Je nach Art der Variation läßt sich der Übergang allmählich ausgestalten oder stufenweise einstellen.

Die Faserorientierung von Fasern ist im ersten Bereich 16 und im zweiten Bereich 20 im wesentlichen senkrecht zu der Abfolgerichtung 18.

Der entsprechende über Lagenaufbau hergestellte Vorkörper wird siliciert, wobei als Carbidbildner Silicium oder Siliciumlegierungen eingesetzt werden. Siliciumlegierungen haben den Vorteil, daß keine freien niedrigschmelzenden Siliciumanteile in der Porenkörpereinrichtung 72 verbleiben. Es bilden sich höherschmelzende Silicide aus. Dies trägt dazu bei, daß die Einsatztemperatur des so eingestellten Porenbrenners 10 erhöht ist.

Wenn zur Herstellung des Vorkörpers matrixbildende Polymere mit hohen Kohlenstoffausbeuten oder SiC-Ausbeuten eingesetzt werden, dann braucht keine getrennte vorherige Pyrolyse durchgeführt werden.

Es kann vorgesehen sein, daß bei der Silicierung eine oder mehrere Pufferplatten aus offenporösem SiC zwischen dem zu silicieren Vorkörper und Carbidbildnergranulat gebracht werden; das Carbidbildnergranulat wird geschmolzen und kann dadurch kapillar in die Pufferplatte und von dort in den Vorkörper eindringen. Die Pufferplatte bzw. Pufferplatten verhindern eine schnelle Reaktion der Schmelze mit der Kohlenstoffstruktur des Vorkörpers, was zu Spannungen in dem hergestellten Werkstück führen könnte.

Die Carbidbildnerinfiltration erfolgt beispielsweise im Vakuum bei Drücken unterhalb von 10 mbar, wenn reines Silicium als Carbidbildner verwendet wird.

Bei der Verwendung von Siliciumlegierungen als Carbidbildner erfolgt die Infiltration des Carbidbildners unter Schutzgasatmosphäre (beispielsweise in einer Argon-Atmosphäre) bei Drücken oberhalb von 1000 mbar.

Eine Wellenlage 38 wird beispielsweise durch Warmumformung eines Gewebes hergestellt. Bei dem Gewebe handelt es sich beispielsweise um ein Prepreg-Gewebe, welches mit Harz beschichtet ist. Es ist auch beispielsweise möglich, daß das Gewebe vor der Warmumformung mit Harz beispielsweise in Pulverform benetzt wird.

Die Wellenlageherstellung kann über eine Wellpappenmaschine, wie sie in der Papierverarbeitung eingesetzt wird, automatisiert erfolgen. Es ist dabei günstig, wenn bei schnell ablaufenden Umformvorgängen schnell aushärtende Harze eingesetzt werden. (Die Umformvorgänge können im Sekundenbereich ablaufen.)

Bei der Warmumformung werden eine oder mehrere Walzen eingesetzt. Um ein Verkleben des Harzes mit einer solchen Walze zu vermeiden, wird günstigerweise eine Trennfolie verwendet oder es werden beispielsweise mit PTFE beschichtete Walzen eingesetzt.

Eine weitere Möglichkeit der Herstellung einer Wellenlage 38 ist das Warmpressen von ebenen (Kohlenstoff-)Lagen. Beispielsweise wird dazu ein Gesenk (wie ein Stahlgesenk) mit einem Oberstempel und einem Unterstempel eingesetzt.

Das Gewebe, welches mit Harz versehen ist, wird zwischen dem Oberstempel und dem Unterstempel positioniert und es erfolgt ein Preßvorgang. Beispielsweise wird der Oberstempel auf den Unterstempel gepreßt.

Es kann vorgesehen sein, daß der Oberstempel mehrteilig ausgebildet ist. Er umfaßt dann eine Mehrzahl von Segmenten. Vorzugsweise lassen sich diese Segmente individuell bewegen und steuern, beispielsweise über ein entsprechendes Federsystem. Dadurch ist es möglich, daß das Gewebe eine "diskontinuierliche" Umformung erfährt, welche nicht gleichzeitig über die gesamte Fläche erfolgt. Beispielsweise beginnt die Umformung in der Mitte eines Gesenks oder am Rand des Gesenks und setzt sich nach außen bzw. zum anderen Ende hin fort. Eine solche Steuerung der Umformung kann vorteilhaft sein, da das Gewebe üblicherweise starr und hochsteif ist.

Unterschiedliche Lagen und insbesondere Wellenlagen 38 und Decklagen 40 werden miteinander verbunden. Bevorzugt sind Strukturen, bei denen Decklagen und Wellenlagen alternieren, wobei dann eine Wellenlage mit zwei Decklagen verbunden ist und eine innere Decklage mit zwei Wellenlagen verbunden ist. Eine solche Decklagen-Wellenlagen-Struktur weist eine hohe mechanische Stabilität auf.

Es kann vorgesehen sein, daß nach dem Zusammenfügen während des Verbindungsvorgangs von Wellenlagen und Decklagen ein Druck ausgeübt wird, um die einzelnen Wellenberge und Wellentäler plastisch zu verformen. Dadurch ergeben sich vergrößerte Fügeflächen mit den Decklagen.

Die Fügung erfolgt insbesondere derart, daß die Fügestellen hohe SiC-Anteile und geringe Mikroporositäten aufweisen. Dadurch läßt sich ein dauerhafter Verbund erreichen. Beispielsweise werden poröse Kohlenstoffe wie Holzpulvermischungen als Fügesubstanzen eingesetzt; es ist günstig, wenn eine vollständige Durchreaktion mit Si-Schmelzen erfolgt und man eine reine SiSiC-Matrix erhält.

Beispielsweise erfolgt die Fügung in einem Umluftofen mit gleichzeitiger mechanischer Druckbeaufschlagung, oder in einem Autoklaven mit Drucksteuerung und Temperatursteuerung, oder in einer Warmpresse.

In einem konkreten Ausführungsbeispiel wurde eine plattenförmige Struktur mittels eines Gewebes des Typs M6843000P der Firma Vom Baur hergestellt. Das Gewebe wies folgende Spezifikationen auf: Kette: 3,3 Fd/cm 400 tx, Schuß: 3,3 Fd/cm 200 tx 2-fach, Flächengewicht: 270 g/m², mit EP-Pulver beschichtet zur Fixierung der Kett- und Schußrichtung. Die Maschenweite zwischen Kett- und Schußrichtung beträgt ca. 6 mm². Die Wellung zur Herstellung einer Wellenlage wurde durch Fixierung des Gewebes in einem Aluminium-Wellengesenk hergestellt. Dazu wurde das Gewebe zwischen einer ersten Gesenkhälfte und einer zweiten Gesenkhälfte des Aluminium-Wellengesenks eingelegt. In einem Umluftofen wurde bei ca. 250°C unter Luft bei einer Heizdauer von ca. 2 Stunden die Schlichte des Gewebes ausgehärtet, so daß sich eine stabile Wellenform ergab. Anschließend wurde das wellenförmige Gewebe zugeschnitten.

Auf ähnliche Weise wurden ebene Gewebelagen behandelt, um diese zu versteifen.

Es wurden drei Wellenlagen mit einer Wellenamplitude von 6,7 mm und mit einem Wellenabstand (dem Abstand benachbarter Wellentäler 58; Figur 5) von 12 mm übereinander gelegt. Zwischen den Wellenlagen wurden insgesamt vier Decklagen aufgelegt. Die Gewebelagen wurden dadurch miteinander verbunden, daß flüssiges Phenolharz auf die Einzellagen in einem Tauchbad aufgebracht wurde.

Die resultierende Struktur entspricht dem in Figur 5 gezeigten Körper.

Die mittleren Wellenlage (die Wellenlage 50 gemäß Figur 5) wurde bezüglich der anderen Wellenlage 46 und 48 um 90° gedreht, so daß die Wellenrichtung der mittleren Wellenlage senkrecht zu der Wellenrichtung der ersten Wellenlagen und der zweiten Wellenlage 50 ist. Dadurch läßt sich eine höhere Druckstabilität erreichen.

Der Vorkörper wurde mit einem Flächengewicht von 9 g/cm² beschwert, um eine Verbindung und Verdichtung der einzelnen Lagen zu erreichen. Zwischen dem Flächengewicht und dem Vorkörper wurde eine Trennfolie aus Teflon gelegt, um eine Anhaftung des Flächengewichts am Bauteil zu verhindern.

Der resultierende Vorkörper hat die Abmessungen von 290 x 290 x 20 mm³ mit einer Massen von 266,8 g. Das Flächengewicht betrug 3,2 kg/m².

Dieser Vorkörper wurde unter Stickstoffatmosphäre bei 1650°C pyrolysiert. Der Massenverlust bei der Pyrolyse betrug 10 %, die Dickenschrumpfung 1,5 %.

Die so entstandene C/C-Platte (Kohlenstoff-Körper mit integrierten Kohlenstoffasern) wurde mit einem Schnittwinkel von 45° in Segmente zugeschnitten. Es wurden dabei sechs Einzelsegmente hergestellt (entsprechend den Streifen 66), welche dann um 90° gedreht wurden.

Die Seitenflächen dieser Segmente 66 (die Decklagenbereiche) wurden mittels einer Fügepaste, welche sich aus 66 Massen-% Phenolharz und 33 Massen-% Kokspulver zusammensetzt, zusammengefügt. Nach der Fügung betrug das Flächengewicht 4,3 kg/m².

Anschließend erfolgte eine Silicierung mit dem Anbieten von Silicium von der Oberseite des Vorkörpers her. Als Carbidbildner wurde Siliciumgranulat mit einem Durchmessern von ca. 10 mm eingesetzt, wobei keine Pufferplatte verwendet wurde. Die mittels Fügepaste gefügten Segmente wurden dabei endgültig verbunden. Das Siliciumangebot betrug 150 Massen-% bezogen auf die Bauteilmasse des Vorkörpers, wobei 100 % durch den Vorkörper aufgenommen wurde.

Es wurde dadurch eine offenporöse und formstabile Keramikstruktur als Porenkörpereinrichtung mit den Abmessungen 130 x 150 x 20 mm³ hergestellt. Das Flächengewicht betrug 9,8 kg/m².

Anschließend erfolgte eine Auslagerung des Werkstücks für fünf Stunden bei einer Temperatur von ca. 1000°C an Luft. Hierbei stellte sich ein Massenverlust von 25 % ein. Das Flächengewicht betrug danach 7,4 kg/m². Der relativ hohe Massenverlust ist auch auf die teilweise oxidische Reaktion von Kohlenstoff von Kohlenstofffasen zurückzuführen.

Das Werkstück zeigte nach der Auslagerung keinerlei Risse oder Verzugserscheinungen. Die passive Oxidation des SiC war an der Oberfläche durch Anlauffarben sichtbar.

Anschließend wurde das Werkstück durch Vakuumplasmaspritzen mit Cordierit umseitig beschichtet. Dadurch entstand eine Massenzunahme von 9 %.

Bei der erfindungsgemäßen Lösung ergibt sich die Möglichkeit, daß ein Wärmeübertrager (und insbesondere ein Hochtemperaturwärmeübertrager), der die heißen Abgase der Verbrennungszone der Porenkörpereinrichtung 14 nutzt, direkt angeschlossen wird. Dazu wird an das äußere Ende 24 des zweiten Bereichs 20 ein keramischer Wärmeübertrager, insbesondere eine Plattenwärmeübertrager, angefügt oder angekoppelt.

Entsprechende Öffnungen bzw. Bohrungen des Wärmeübertragers müssen dabei so an das Ende 24 angekoppelt sein, daß abströmende Verbrennungsgase diesen Wärmeübertrager durchströmen können.

Es ist insbesondere vorgesehen, einen keramischen Plattenwärmeübertrager anzukoppeln, welcher aus kohlenstofffaserverstärktem SiC hergestellt ist. Dadurch lassen sich thermische Spannungen an der Grenzfläche zwischen Wärmeübertrager und Porenkörpereinrichtung 14 vermeiden.

## Patentansprüche

1. Porenkörpereinrichtung für einen Porenbrenner mit einem mehrlagigen Aufbau, umfassend einen ersten Bereich (16), welcher als Vorwärmzone ausgebildet ist und über den einem zweiten Bereich (20) Gas zuführbar ist, wobei der zweite Bereich (20) als Verbrennungszone ausgebildet ist, wobei der erste Bereich (16) aus einem carbidkeramischen Material hergestellt ist, der zweite Bereich (20) aus einem carbidkeramischen Material hergestellt ist, und der erste Bereich (16) und der zweite Bereich (20) das gleiche carbidkeramische Material enthält,
wobei sich der erste Bereich (16) und der zweite Bereich (20) bezüglich Porenverteilung und/oder Porosität und/oder Porenausrichtung und/oder Porengröße unterscheiden, und wobei der erste Bereich (16) und der zweite Bereich (20) Wellenlagen aufweisen, wobei eine Wellenlage (38) eine in mindestens einer Richtung variierende lokale Höhe aufweist, **dadurch gekennzeichnet, daß** der erste Bereich (16) und der zweite Bereich (20) miteinander verbunden sind und daß eine Wellenlage (38) zwischen beabstandeten Decklagen (40) angeordnet ist

2. Porenkörpereinrichtung nach Anspruch 1, **dadurch gekennzeichnet, daß** der erste Bereich (16) und der zweite Bereich (20) aus einem faserverstärkten carbidkeramischen Material hergestellt sind.

3. Porenkörpereinrichtung nach Anspruch 1 oder 2, **dadurch gekennzeichnet, daß** der erste Bereich (16) und der zweite Bereich (20) SiC umfassen.

4. Porenkörpereinrichtung nach einem der vorangehenden Ansprüche, **dadurch gekennzeichnet, daß** der erste Bereich (16) und der zweite Bereich (20) aus SiC hergestellt sind mit einer Kohlenstoff-Faserverstärkung.

5. Porenkörpereinrichtung nach einem der vorangehenden Ansprüche, **dadurch gekennzeichnet, daß** als Faserverstärkung Fasern und/oder Gewebe eingesetzt sind.

6. Porenkörpereinrichtung nach einem der vorangehenden Ansprüche, **dadurch gekennzeichnet, daß** an dem carbidkeramischen Material mindestens teilweise eine Oxidschicht angeordnet ist.

7. Porenkörpereinrichtung nach einem der vorangehenden Ansprüche, **dadurch gekennzeichnet, daß** eine Oberfläche des ersten Bereichs (16) und/oder des zweiten Bereichs (20) mindestens teilweise mit einer Korrosions- / Oxidationsschutzschicht versehen ist.

8. Porenkörpereinrichtung nach Anspruch 7, **dadurch gekennzeichnet, daß** die Korrosions- / Oxidationsschutzschicht eine keramische Schicht ist.

9. Porenkörpereinrichtung nach Anspruch 7 oder 8, **dadurch gekennzeichnet, daß** eine Oxidations -/ Korrosionsschutzschicht aus Cordierit und/oder Yttriumsilikat vorgesehen ist.

10. Porenkörpereinrichtung nach einem der vorangehenden Ansprüche, **dadurch gekennzeichnet, daß** der zweite Bereich (20) mit mindestens einer Ausnehmung (26) für einen Zünder versehen ist.

11. Porenkörpereinrichtung nach einem der vorangehenden Ansprüche, **dadurch gekennzeichnet, daß** die Porosität im ersten Bereich zwischen 20 Volumen-% und 30 Volumen-% liegt.

12. Porenkörpereinrichtung nach einem der vorangehenden Ansprüche, **dadurch gekennzeichnet, daß** im ersten Bereich (16) Poren einer mittleren Größe kleiner 2mm vorliegen.

13. Porenkörpereinrichtung nach einem der vorangehenden Ansprüche, **dadurch gekennzeichnet, daß** im zweiten Bereich (20) Poren einer mittleren Größe von 2 mm bis 8 mm vorliegen.

14. Porenkörpereinrichtung nach einem der vorangehenden Ansprüche, **dadurch gekennzeichnet, daß** die Porosität im zweiten Bereich (20) größer 80 Volumen-% ist.

15. Porenkörpereinrichtung nach einem der vorangehenden Ansprüche, **dadurch gekennzeichnet, daß** eine Lage mittels eines Gewebes hergestellt ist.

16. Porenkörpereinrichtung nach einem der vorangehenden Ansprüche, **dadurch gekennzeichnet, daß** die Gesamthöhe der Wellenlage (38) im wesentlichen konstant ist.

17. Porenkörpereinrichtung nach einem der vorangehenden Ansprüche, **dadurch gekennzeichnet, daß** der mehrlagige Aufbau gradiert ist.

18. Porenkörpereinrichtung nach Anspruch 17, **dadurch gekennzeichnet, daß** mindestens einer der folgenden Parameter variiert ist: Maschenweite und/oder Gitterweite eines Gewebes; Gesamthöhe einer Wellenlage; Wellenzahl einer Wellenlage; Dicke einer Lage; K-Zahl eines Gewebes; thermische Leitfähigkeit eines Gewebes; thermische Vorbehandlung eines Gewebes; SiC-Gehalt.

19. Porenkörpereinrichtung nach Anspruch 18, **Dadurch gekennzeichnet, daß** ausgehend von einem äußeren Ende (22) des ersten Bereichs (16) zu einem äußeren Ende (24) des zweiten Bereichs (20) die Wellenzahl abnimmt.

20. Porenkörpereinrichtung nach Anspruch 18 oder 19, **dadurch gekennzeichnet, daß** ausgehend von einem äußeren Ende (22) des ersten Bereichs (16) zu einem äußeren Ende (24) des zweiten Bereichs (20) die Wellenhöhe zunimmt.

21. Porenkörpereinrichtung nach einem der Ansprüche 18 bis 20, **dadurch gekennzeichnet, daß** in dem ersten Bereich (16) hochfeste Kohlenstofffasern eingesetzt sind.

22. Porenkörpereinrichtung nach Anspruch 21, **dadurch gekennzeichnet, daß** im zweiten Bereich wärmeleitfähige Pechfasern eingesetzt sind.

23. Porenkörpereinrichtung nach einem der Ansprüche 18 bis 22, **dadurch gekennzeichnet, daß** ausgehend von einem äußeren Ende (22) des ersten Bereichs (16) zu einem äußeren Ende (24) des zweiten Bereichs (20) die K-Zahl von verwendetem Gewebe zunimmt.

24. Porenkörpereinrichtung nach einem der Ansprüche 18 bis 23, **dadurch gekennzeichnet, daß** im ersten Bereich (16) nicht vorbehandeltes Gewebe eingesetzt ist.

25. Porenkörpereinrichtung nach Anspruch 24, **dadurch gekennzeichnet, daß** im zweiten Bereich (20) vorbehandeltes Gewebe eingesetzt ist.

26. Porenkörpereinrichtung nach einem der Ansprüche 18 bis 25, **dadurch gekennzeichnet, daß** ausgehend von einem äußeren Ende (22) des ersten Bereichs (16) zu einem äußeren Ende (24) des zweiten Bereichs (20) die Maschenweite von eingesetztem Gewebe zunimmt.

27. Porenkörpereinrichtung nach einem der Ansprüche 19 bis 26, **gekennzeichnet durch** eine Faserorientierung quer zu einer Abfolgerichtung (18) des zweiten Bereichs (20) auf den ersten Bereich (16).

28. Porenkörpereinrichtung nach einem der vorangehenden Ansprüche, **dadurch gekennzeichnet, daß** der erste Bereich (16) und der zweite Bereich (20) stoffschlüssig miteinander verbunden sind.

29. Porenkörpereinrichtung nach einem der vorangehenden Ansprüche, **dadurch gekennzeichnet, daß** der zweite Bereich Poren und/oder Kanäle (62) aufweist, welche über Wellenlagen (38) hergestellt sind.

30. Porenkörpereinrichtung nach Anspruch 29, **dadurch gekennzeichnet, daß** die Poren und/oder Kanäle (62) parallel oder in einem Winkel größer 0° zu einer Abfolgerichtung (18) des zweiten Bereichs (20) auf den ersten Bereich (16) hergestellt sind.

31. Porenkörpereinrichtung nach einem der vorangehenden Ansprüche, **dadurch gekennzeichnet, daß** für den zweiten Bereich (20) eine Einfassung oder mehrere Einfassungen (96) vorgesehen sind, welcher Kohlenstofffasern umfaßt, welche im wesentlichen parallel zur Abfolgerichtung des zweiten Bereichs auf den ersten Bereich orientiert sind.

32. Porenkörpereinrichtung nach einem der Ansprüche 28 bis 31, **dadurch gekennzeichnet, daß** zwischen dem ersten Bereich (16) und dem zweiten Bereich (20) eine Formschlußfügung hergestellt ist.

33. Verfahren zur Herstellung einer Porenkörper einrichtung gemäß einem der vorangehenden Ansprüche, bei dem zur Herstellung eines Bereichs (16,20) mindestens eine Platte hergestellt wird, welche mindestens eine zwischen Decklagen liegende Wellenlage aufweist, aus der mindestens einen Platte Streifen geschnitten werden, und Streifen über Decklagenbereiche zu einem Fügeverbund gefügt werden.

34. Verfahren nach Anspruch 33, **dadurch gekennzeichnet, daß** die Streifen bezogen auf ihre Position in der mindestens einen Platte vor der Fügung um 90° gedreht werden.

35. Verfahren nach Anspruch 33 oder 34, **dadurch gekennzeichnet, daß** die Streifen in einer Schnittebene geschnitten werden, welche in einem Winkel zu einer Wellenrichtung liegt.

36. Verfahren nach einem der Ansprüche 33 bis 35, **dadurch gekennzeichnet, daß** die Breite der zu fügenden Streifen durch die Dicke der mindestens einen Platte bestimmt ist.

37. Verfahren nach einem der Ansprüche 33 bis 36, **dadurch gekennzeichnet, daß** die mindestens eine Platte als Vorkörper für ein Carbidkeramik-Werkstück hergestellt wird.

38. Verfahren nach Anspruch 37, **dadurch gekennzeichnet, daß** die mindestens eine Platte mittels offenporösem Kohlenstoffgewebe hergestellt wird.

39. Verfahren nach einem der Ansprüche 33 bis 38, **dadurch gekennzeichnet, daß** eine Pyrolyse vor Schneiden der mindestens einen Platte durchgeführt wird.

40. Verfahren nach einem der Ansprüche 33 bis 39, **dadurch gekennzeichnet, daß** die Streifen mittels Harz und/oder SiC-Precursor gefügt werden.

41. Verfahren nach einem der Ansprüche 33 bis 40, **dadurch gekennzeichnet, daß** der Fügeverbund siliciert wird.

42. Porenbrenner, welcher eine Porenkörpereinrichtung gemäß einem der Ansprüche 1 bis 32 aufweist und/oder eine Porenkörper einrichtung aufweist, welche gemäß einem der Ansprüche 33 bis 41 hergestellt ist.

43. Porenbrenner nach Anspruch 42, **dadurch gekennzeichnet, daß** die Porenkörpereinrichtung (14) in einem Gehäuse (12) angeordnet ist.

44. Porenbrenner nach Anspruch 42 oder 43, **dadurch gekennzeichnet, daß** in einer Ausnehmung (26) im zweiten Bereich (20) ein Zünder angeordnet ist.

45. Porenbrenner nach einem der Ansprüche 42 bis 44, **dadurch gekennzeichnet, daß** an den zweiten Bereich (20) ein keramischer Wärmeübertrager angefügt ist.

## Claims

1. Porous body device for a porous burner with a multilayered structure, comprising a first region (16), which is constructed as preheating zone and via which gas can be supplied to a second region (20), the second region (20) being constructed as combustion zone, the first region (16) being made of a carbide-ceramic material, the second region (20) being made of a carbide-ceramic material, and the first region (16) and the second region (20) containing the same carbide-ceramic material, the first region (16) and the second region (20) differing with respect to pore distribution and/or porosity and/or pore orientation and/or pore size, and the first region (16) and the second region (20) comprising wave-shaped layers, a wave-shaped layer (38) having a local height which varies in at least one direction, **characterized in that** the first region (16) and the second region (20) are connected to each other, and **in that** a wave-shaped layer (38) is arranged between spaced-apart cover layers (40).

2. Porous body device in accordance with claim 1, **characterized in that** the first region (16) and the second region (20) are made of a fibre-reinforced carbide-ceramic material.

3. Porous body device in accordance with claim 1 or 2, **characterized in that** the first region (16) and the second region (20) comprise SiC.

4. Porous body device in accordance with any one of the preceding claims, **characterized in that** the first region (16) and the second region (20) are made of SiC with a carbon fibre reinforcement.

5. Porous body device in accordance with any one of the preceding claims, **characterized in that** fibres and/or woven materials are used as fibre reinforcement.

6. Porous body device in accordance with any one of the preceding claims, **characterized in that** an oxide layer is arranged at least partially on the carbide-ceramic material.

7. Porous body device in accordance with any one of the preceding claims, **characterized in that** a surface of the first region (16) and/or of the second region (20) is provided at least partially with a protective layer against corrosion / oxidation.

8. Porous body device in accordance with claim 7, **characterized in that** the protective layer against corrosion / oxidation is a ceramic layer.

9. Porous body device in accordance with claim 7 or 8, **characterized in that** a protective layer against oxidation / corrosion consisting of cordierite and/or yttrium silicate is provided.

10. Porous body device in accordance with any one of the preceding claims, **characterized in that** the second region (20) is provided with at least one recess (26) for an igniter.

11. Porous body device in accordance with any one of the preceding claims, **characterized in that** the porosity in the first region lies between 20 volume % and 30 volume %.

12. Porous body device in accordance with any one of the preceding claims, **characterized in that** pores having an average size of less than 2 mm are present in the first region (16).

13. Porous body device in accordance with any one of the preceding claims, **characterized in that** pores having an average size of 2 mm to 8 mm are present in the second region (20).

14. Porous body device in accordance with any one of the preceding claims, **characterized in that** the porosity in the second region (20) is greater than 80 volume %.

15. Porous body device in accordance with any one of the preceding claims, **characterized in that** a layer is produced by means of a woven material.

16. Porous body device in accordance with any one of the preceding claims, **characterized in that** the total height of the wave-shaped layer (38) is substantially constant.

17. Porous body device in accordance with any one of the preceding claims, **characterized in that** the multilayered structure is graduated,

18. Porous body device in accordance with claim 17, **characterized in that** at least one of the following parameters is varied: mesh width and/or grid width of a woven material; total height of a wave-shaped layer; number of waves in a wave-shaped layer; thickness of a layer; K number of a woven material; thermal conductivity of a woven material; thermal pretreatment of a woven material; SiC content.

19. Porous body device in accordance with claim 18, **characterized in that** the number of waves decreases from an outer end (22) of the first region (16) to an outer end (24) of the second region (20).

20. Porous body device in accordance with claim 18 or 19, **characterized in that** the wave height increases from an outer end (22) of the first region (16) to an outer end (24) of the second region (20).

21. Porous body device in accordance with any one of claims 18 to 20, **characterized in that** high-strength carbon fibres are used in the first region (16).

22. Porous body device in accordance with claim 21, **characterized in that** thermally conductive pitch fibres are used in the second region.

23. Porous body device in accordance with any one of claims 18 to 22, **characterized in that** the K number of the woven material used increases from an outer end (22) of the first region (16) to an outer end (24) of the second region (20).

24. Porous body device in accordance with any one of claims 18 to 23, **characterized in that** woven material that was not pre-treated is used in the first region (16).

25. Porous body device in accordance with claim 24, **characterized in that** pre-treated woven material is used in the second region (20).

26. Porous body device in accordance with any one of claims 18 to 25, **characterized in that** the mesh width of the woven material used increases from an outer end (22) of the first region (16) to an outer end (24) of the second region (20).

27. Porous body device in accordance with any one of claims 19 to 26, **characterized by** a fibre orientation transversely to a direction of sequence (18) in which the second region (20) follows the first region (16).

28. Porous body device in accordance with any one of the preceding claims, **characterized in that** the first region (16) and the second region (20) are joined to each other with a substance-to-substance bond.

29. Porous body device in accordance with any one of the preceding claims, **characterized in that** the second region comprises pores and/or channels (62) which are produced by wave-shaped layers (38).

30. Porous body device in accordance with claim 29, **characterized in that** the pores and/or channels (62) are produced parallel or at an angle greater than 0° to a direction of sequence (18) in which the second region (20) follows the first region (16).

31. Porous body device in accordance with any one of the preceding claims, **characterized in that** there is provided for the second region (20) an enclosure or a plurality of enclosures (96) comprising carbon fibres which are orientated substantially parallel to the direction of sequence in which the second region follows the first region.

32. Porous body device in accordance with any one of claims 28 to 31, **characterized in that** a positively locking connection is made between the first region (16) and the second region (20).

33. Method for producing a porous body device in accordance with any one of the preceding claims, wherein at least one plate comprising at least one wave-shaped layer lying between cover layers is made in order to produce a region (16, 20), strips are cut out of the at least one plate, and strips are joined by means of cover layer regions to form a joined composite.

34. Method in accordance with claim 33, **characterized in that** the strips are turned in relation to their position in the at least one plate through 90° before the joining.

35. Method in accordance with claim 33 or 34, **characterized in that** the strips are cut in a cutting plane which lies at an angle to a direction of the waves.

36. Method in accordance with any one of claims 33 to 35, **characterized in that** the width of the strips to be joined is determined by the thickness of the at least one plate.

37. Method in accordance with any one of claims 33 to 36, **characterized in that** the at least one plate is produced as a preform for a carbide-ceramic workpiece.

38. Method in accordance with claim 37, **characterized in that** the at least one plate is produced by means of open-porous carbon woven material.

39. Method in accordance with any one of claims 33 to 38, **characterized in that** a pyrolysis is carried out before cutting the at least one plate.

40. Method in accordance with any one of claims 33 to 39, **characterized in that** the strips are joined by means of resin and/or SiC precursor.

41. Method in accordance with any one of claims 33 to 40, **characterized in that** the joined composite is siliconized.

42. Porous burner, which comprises a porous body device in accordance with any one of claims 1 to 32 and/or comprises a porous body device which is produced in accordance with any one of claims 33 to 41.

43. Porous burner in accordance with claim 42, **characterized in that** the porous body device (14) is arranged in a housing (12).

44. Porous burner in accordance with claim 42 or 43, **characterized in that** an igniter is arranged in a recess (26) in the second region (20).

45. Porous burner in accordance with any one of claims 42 to 44, **characterized in that** a ceramic heat exchanger is attached to the second region (20).

## Revendications

1. Corps poreux pour un brûleur poreux présentant une structure multicouche, comprenant une première zone (16) qui est conçue comme une zone de préchauffage et à travers laquelle du gaz peut être acheminé à une deuxième zone (20), la deuxième zone (20) étant conçue comme une zone de combustion et la première zone (16) étant fabriquée en un matériau en carbure de céramique, la deuxième zone (20) étant fabriquée en un matériau en carbure de céramique et la première zone (16) et la deuxième zone (20) contenant le même matériau de carbure de céramique, la première zone (16) et la deuxième zone (20) se distinguant au niveau de la répartition des pores et/ou de la porosité et/ou de la configuration des pores et/ou de la taille des pores et la première zone (16) et la deuxième zone (20) présentant des couches ondulées, une couche ondulée (38) présentant une hauteur locale variante au moins dans une direction, **caractérisé en ce que** la première zone (16) et la deuxième zone (20) sont reliées l'une à l'autre, et **en ce qu'**une couche ondulée (38) se situe entre des couches superficielles distantes (40).

2. Corps poreux selon la revendication 1, **caractérisé en ce que** la première zone (16) et la deuxième zone (20) sont fabriquées en un matériau de carbure de céramique renforcé par des fibres.

3. Corps poreux selon la revendication 1 ou 2, **caractérisé en ce que** la première zone (16) et la deuxième zone (20) comprennent du SiC.

4. Corps poreux selon l'une des revendications précédentes, **caractérisé en ce que** la première zone (16) et la deuxième zone (20) en SiC sont renforcées avec des fibres de carbone.

5. Corps poreux selon l'une des revendications précédentes, **caractérisé en ce que** l'on utilise comme renforcement avec des fibres, des fibres et/ou des tissus.

6. Corps poreux selon l'une des revendications précédentes, **caractérisé en ce que**, sur le matériau de carbure de céramique est disposé au moins partiellement, une couche d'oxyde.

7. Corps poreux selon l'une des revendications précédentes, **caractérisé en ce qu'**une surface de la première zone (16) et/ou de la deuxième zone (20) est dotée au moins en partie d'une couche de protection contre la corrosion/ l'oxydation.

8. Corps poreux selon la revendication 7, **caractérisé en ce que** la couche de protection contre la corrosion/ l'oxydation est une couche de céramique.

9. Corps poreux selon la revendication 7 ou 8, **caractérisé en ce qu'**une couche de projection contre l'oxydation/ la corrosion en cordiérite et/ou silicate d'yttrium est prévue.

10. Corps poreux selon l'une des revendications précédentes, **caractérisé en ce que** la deuxième zone (20) est dotée d'au moins un évidement (26) pour un allumeur.

11. Corps poreux selon l'une des revendications précédentes, **caractérisé en ce que** la porosité dans la première zone se situe entre 20 % en volume et 30 % en volume.

12. Corps poreux selon l'une des revendications précédentes, **caractérisé en ce que**, dans la première zone (16) se trouvent des pores présentant une taille moyenne inférieure à 2 mm.

13. Corps poreux selon l'une des revendications précédentes, **caractérisé en ce que** dans la deuxième zone (20) se trouvent des pores présentant une taille moyenne de 2 mm à 8 mm.

14. Corps poreux selon l'une des revendications précédentes, **caractérisé en ce que** la porosité dans la deuxième zone (20) est supérieure à 80 % en volume.

15. Corps poreux selon l'une des revendications précédentes, **caractérisé en ce qu'**une couche est fabriquée au moyen d'un tissu.

16. Corps poreux selon l'une des revendications précédentes, **caractérisé en ce que** la hauteur totale de la couche ondulée (38) est essentiellement constante.

17. Corps poreux selon l'une des revendications précédentes, **caractérisé en ce que** la structure multicouche est graduelle.

18. Corps poreux selon la revendication 17, **caractérisé en ce qu'**au moins l'un des paramètres suivants varie : la largeur des mailles et/ou la largeur de treillis d'un tissu ; la hauteur totale d'une couche ondulée ; le nombre d'ondulations d'une couche ondulée ; l'épaisseur d'une couche ; le nombre K d'un tissu ; la conductivité thermique d'un tissu ; le prétraitement thermique d'un tissu, la teneur en SiC.

19. Corps poreux selon la revendication 18, **caractérisé en ce que**, à partir d'une extrémité externe (22) de la première zone (16) à une extrémité externe (24) de la deuxième zone (20), le nombre d'ondulations diminue.

20. Corps poreux selon la revendication 18 ou 19, **caractérisé en ce que**, à partir d'une extrémité externe (22) de la première zone (16) à une extrémité externe (24) de la deuxième zone (20), la hauteur d'ondulation augmente.

21. Corps poreux selon l'une des revendications 18 à 20, **caractérisé en ce que**, dans la première zone (16), des fibres de carbone hautement résistantes sont utilisées.

22. Corps poreux selon la revendication 21, **caractérisé en ce que**, dans la deuxième zone, on utilise des fibres de poix thermiquement conductrices.

23. Corps poreux selon l'une des revendications 18 à 22, **caractérisé en ce que**, à partir d'une extrémité externe (22) de la première zone (16) à une extrémité externe (24) de la deuxième zone (20), le nombre K du tissu utilisé augmente.

24. Corps poreux selon l'une des revendications 18 à 23, **caractérisé en ce que**, dans la première zone (16), on utilise un tissu non prétraité.

25. Corps poreux selon la revendication 24, **caractérisé en ce que**, dans la deuxième zone (20), on utilise un tissu prétraité.

26. Corps poreux selon l'une des revendications 18 à 25, **caractérisé en ce que**, à partir d'une extrémité externe (22) de la première zone (16) à une extrémité externe (24) de la deuxième zone (20), la largeur de maille du tissu utilisé augmente.

27. Corps poreux selon l'une des revendications 19 à 26, **caractérisé par** une orientation de fibres perpendiculaire au sens de couches consécutives (18) de la deuxième zone (20) sur la première zone (16).

28. Corps poreux selon l'une des revendications précédentes, **caractérisé en ce que** la première zone (16) et la deuxième zone (20) sont liées étroitement l'une à l'autre.

29. Corps poreux selon l'une des revendications précédentes, **caractérisé en ce que** la deuxième zone présente des pores et/ou des canaux (62) qui sont fabriqués au moyen de couches ondulées (38).

30. Corps poreux selon la revendication 29, **caractérisé en ce que** les pores et/ou les canaux (62) sont parallèles ou à un angle supérieur à 0° par rapport à un sens de couches consécutives (18) de la deuxième zone (20) sur la première zone (16).

31. Corps poreux selon l'une des revendications précédentes, **caractérisé en ce que**, pour la deuxième zone (20), une bordure ou plusieurs bordures (96) sont prévues, comprenant des fibres de carbone qui sont orientées pour l'essentiel parallèlement au sens de couche consécutive de la deuxième zone sur la première zone.

32. Corps poreux selon l'une des revendications 28 à 31, **caractérisé en ce que**, entre la première zone (16) et la deuxième zone (20), un verrouillage par forme est produit.

33. Procédé de production d'un corps poreux selon l'une des revendications précédentes, dans lequel pour la production d'une zone (16, 20), on produit au moins une plaque qui présente au moins une couche ondulée se trouvant entre les couches superficielles, des bandes étant découpées dans au moins une plaque et des bandes étant jointes en un composite de jointage au moyen des zones superficielles.

34. Procédé selon la revendication 33, **caractérisé en ce que** les bandes sont retournées de 90 ° par rapport à leur position dans au moins une plaque avant le jointage.

35. Procédé selon la revendication 33 ou 34, **caractérisé en ce que** les bandes sont découpées dans un plan de coupe qui est dans un angle par rapport à un sens d'ondulation.

36. Procédé selon l'une des revendications 33 à 35, **caractérisé en ce que** la largeur des bandes à joinre est déterminée par l'épaisseur d'au moins une plaque.

37. Procédé selon l'une des revendications 33 à 36, **caractérisé en ce qu'**au moins une plaque est produite en tant que précurseur pour une pièce de carbure de céramique.

38. Procédé selon la revendication 37, **caractérisé en ce qu'**au moins la plaque est produite au moyen d'un tissu de carbone à pores ouverts.

39. Procédé selon l'une des revendications 33 à 38, **caractérisé en ce qu'**une pyrolyse est réalisée avant la découpe d'au moins une plaque.

40. Procédé selon l'une des revendications 33 à 39, **caractérisé en ce que** les bandes sont jointes au moyen de résine et/ou de précurseur de SiC.

41. Procédé selon l'une des revendications 33 à 40, **caractérisé en ce que** le composite de jointage est silicé.

42. Brûleur poreux qui présente un corps poreux selon l'une des revendications 1 à 32 et/ou un corps poreux qui est produit selon l'une des revendications 33 à 41.

43. Brûleur poreux selon la revendication 42, **caractérisé en ce que** le corps poreux (14) est disposé dans un boîtier (12).

44. Brûleur poreux selon la revendication 42 ou 43, **caractérisé en ce que**, dans un évidement (26) de la deuxième zone (20) est disposé un allumeur.

45. Brûleur poreux selon l'une des revendications 42 à 44, **caractérisé en ce que**, sur la deuxième zone (20) est ajouté un échangeur de chaleur en céramique.
